(19) Europäisches Patentamt
European Patent Office
Office européen des brevets

(11) EP 2 879 782 B1

(12) **EUROPÄISCHE PATENTSCHRIFT**

(45) Veröffentlichungstag und Bekanntmachung des Hinweises auf die Patenterteilung:
**23.01.2019 Patentblatt 2019/04**

(21) Anmeldenummer: **13744435.2**

(22) Anmeldetag: **26.07.2013**

(51) Int Cl.:
***B01F 17/00*** (2006.01) ***C09D 5/00*** (2006.01)

(86) Internationale Anmeldenummer:
**PCT/EP2013/002219**

(87) Internationale Veröffentlichungsnummer:
**WO 2014/023397 (13.02.2014 Gazette 2014/07)**

(54) **TENSIDMISCHUNGEN**

TENSIDE COMPOSITIONS

MÉLANGES DE TENSIOACTIFS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.08.2012 EP 12005710**

(43) Veröffentlichungstag der Anmeldung:
**10.06.2015 Patentblatt 2015/24**

(73) Patentinhaber: **Merck Patent GmbH**
**64293 Darmstadt (DE)**

(72) Erfinder:
- **PAHNKE, Joerg**
  **64285 Darmstadt (DE)**
- **JONSCHKER, Gerhard**
  **64646 Heppenheim (DE)**
- **SCHELLENBERGER, Steffen**
  **64293 Darmstadt (DE)**
- **KAISER, Mathias**
  **36088 Huenfeld (DE)**

(56) Entgegenhaltungen:
**WO-A1-2012/084118 DE-A1-102004 021 208**
**US-A1- 2005 233 922**

- **JOHNSON C H J ET AL: "Surface shape and the calculation of surface tension from maximum bubble pressure", JOURNAL OF COLLOID AND INTERFACE SCIENCE, ACADEMIC PRESS, NEW YORK, NY, US, Bd. 47, Nr. 1, 1. April 1974 (1974-04-01), Seiten 117-121, XP024187733, ISSN: 0021-9797, DOI: 10.1016/0021-9797(74)90085-X [gefunden am 1974-04-01]**
- **D.E. HIRT ET AL.: "Dynamic Surface Tension of Hydrocarbon and Flurocarbon Surfactant solutions using the Maximum bubble Pressure Method", COLLOIDS AND SURFACES, Bd. 44, 1990, Seiten 101-117, XP002718900,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 879 782 B1

## Beschreibung

Gegenstand der vorliegenden Erfindung sind neue Tensidmischungen, deren Verwendung als Additive z. B. in Zubereitungen zur Oberflächenbeschichtung wie Farben, Lacken, Schutzanstrichen und Spezialcoatings in elektronischen oder in optischen Anwendungen.

Fluortenside, deren statische Oberflächenspannung sehr niedrig ist (16-18 mN/m), sind in verschiedensten Anwendungen einsetzbar und tragen z.B. zur verbesserten Benetzung von Oberflächen bei. So werden sie z.B. als Grenzflächenvermittler bzw. Emulgator oder Viskositätsminderer in Farben, Lacken oder Klebstoffen verwendet.

In WO 03/010128 werden Perfluoralkyl-substituierte Amine, Säuren, Aminosäuren und Thioethersäuren beschrieben, die eine C3-20-Perfluoralkyl-Gruppe aufweisen. Aus JP-A-2001/133984 sind oberflächenaktive Verbindungen mit Perfluoralkoxy-Ketten bekannt, die sich zum Einsatz in Antireflex-Beschichtungen eignen. Aus JP-A-09/111286 ist die Verwendung von Perfluorpolyethertensiden in Emulsionen bekannt. In WO 2006/072401 und WO 2010/003567 werden oberflächenaktive Verbindungen mit Trifluormethoxygruppen beschrieben.

Spezielle Anwendungen von Sulfosuccinaten und/oder Sulfotricarballylaten mit verschiedenen fluorierten Seitenketten sind in US 4,968,599 und US 4,988,610 sowie US 6, 890, 608 beschrieben und in A.R. Pitt et al., Colloids and Surfaces A: Physicochemical and Engineering Aspects, 1996, 114, 321-335; A.R. Pitt, Progr. Colloid Polym. Sci, 1997, 103, 307-317 und Z.-T. Liu et al., Ind. Eng. Chem. Res. 2007, 46, 22-28. Weitere Fluortenside, insbesondere Succinate und Tricarballylate mit fluorierten Alkylgruppen, sind in WO 2009/149807, WO 2010/003567, WO 2010/149262, WO 2011/082770 und WO 2012/084118 beschrieben.

Die Leistungsfähigkeit von Tensiden wird maßgeblich dadurch bestimmt, inwieweit und wie schnell die Oberflächenspannung in einem Lösungsmittel reduziert werden kann. Eine hierbei entscheidende physikalische Messgröße ist die statische Oberflächenspannung $\gamma_{stat}$. (mN/m). Methoden zur Bestimmung der Oberflächenspannung sind in C.H.J. Johnson et al., Journal of Colloid and Interface Science, Bd. 47, Nr.1, (1974-04-01), Seiten 117-121 und D.E. Hirt et al., Colloids and Surfaces, Bd. 44, 1990, Seiten 101-117 beschrieben. Zur Reduzierung der Oberflächenspannung werden neben Einzelsubstanzen auch Mischungen von Fluortensiden eingesetzt. Tensidmischungen sind in US 2005/0233922 A1 und DE 102004021208 A1 beschrieben. Weiterhin besteht aber Bedarf nach Methoden zur Steigerung der Leistungsfähigkeit von Tensiden.

Es wurden nun neue Tensidmischungen gefunden, mit denen es möglich ist, die Absenkung der statischen Oberflächenspannung $\gamma_{stat}$. bei möglichst geringer Einsatzkonzentration zu bewerkstelligen. Hierbei können Tensidmischungen bezüglich der statischen Oberflächenspannung $\gamma_{stat}$. auf einen weitaus geringeren Wert abgesenkt werden als die Oberflächenspannungen der Einzeltenside.

Ein erster Gegenstand der vorliegenden Erfindung ist eine Tensidmischung enthaltend mindestens eine Verbindung A, deren dynamische Oberflächenspannung $y_{dyn}$. gemessen nach der Blasendruckmethode bei 20°C ± 0,2°C bei einer Einsatzkonzentration von 0.1 Gew.-% und einer Blasenlebensdauer von 100 ms ≤ 45 mN/m ist, und mindestens eine Verbindung B, deren statische Oberflächenspannung $\gamma_{stat}$. ≤ der statischen Oberflächenspannung $\gamma_{stat}$. der Verbindung A ist, wobei die statische Oberflächenspannung $\gamma_{stat}$. nach der Wilhelmy Plattenmethode bei 20°C ± 0,2°C gemessen ist und wobei mindestens eine der Verbindungen A und mindestens eine der Verbindungen B ein Fluortensid ist.

Bevorzugt weisen die Verbindungen A eine dynamische Oberflächenspannung $\gamma_{dyn}$. von ≤ 35 mN/m auf, insbesondere von ≤ 30 mN/m, (0,1 Gew.-% und 100 ms) und Verbindungen B mit einer statischen Oberflächenspannung $\gamma_{stat}$. von ≤ 20 mN/m.

Zur Bestimmung der dynamischen Oberflächenspannung $\gamma_{dyn}$. wird eine 0.1%igen (Gewichtsprozent) wässrige Lösung der zu untersuchenden Verbindung nach der Blasendruckmethode bei 20°C ± 0,2°C der Messlösung mit einem Tensiometer vermessen. Hierbei werden Luftblasen mit verschiedenen Geschwindigkeiten durch eine Kapillare in die Tensidlösung gedrückt. Aus der dabei auftretenden Druckänderung kann die dynamische Oberflächenspannung $\gamma_{dyn}$. in Abhängigkeit von der Blasenlebensdauer mit folgender Gleichung bestimmt werden:

$$\gamma = \frac{r(p_{max} - \rho \cdot g \cdot h)}{2}$$

$p_{max}$ = Maximaldruck, ρ = Dichte der Flüssigkeit, h= Eintauchtiefe, r= Radius der Kapillare

Zur Bestimmung der statischen Oberflächenspannung $\gamma_{stat}$. wird eine 0.1%igen (Gewichtsprozent) wässrige Lösung der zu untersuchenden Verbindung nach der Wilhelmy Plattenmethode bei 20°C ± 0,2°C der Messlösung und einer Platinplatte mit einer Länge von 19,9mm mit einem Tensiometer vermessen. Hierbei wird die Oberflächen- bzw. Grenzflächenspannung der Tensidlösung aus der auf die benetzte Länge einer Platte wirkenden Kraft nach folgender Formel berechnet.

$$\gamma = \frac{F}{L \cdot \cos\theta} = \frac{F}{L}$$

y= Grenz- oder Oberflächenspannung; F= auf die Waage wirkende Kraft; L= benetzte Länge (19,9 mm); θ=Kontaktwinkel)

Die Platte besteht aus angerautem Platin und wird also optimal benetzt, so dass der Kontaktwinkel θ nahe bei θ° liegt. Der Term cos θ erreicht daher annähernd den Wert 1, so dass nur noch die gemessene Kraft und die Länge der Platte berücksichtigt werden müssen.

Überraschend konnte gezeigt werden, dass die speziellen Tensidmischungen der Erfindung bevorzugt die statische Oberflächenspannung $\gamma_{stat}$. auf einen niedrigeren Wert absenken können als die einzelnen Tenside dies vermögen.

Üblicherweise wird die niedrigste zu erreichende Oberflächenspannung durch das Tensid erzielt, das die Oberflächenspannung am weitesten reduziert. Diese Beobachtung resultiert aus der thermodynamischen Gesetzmäßigkeit, dass die oberflächenaktivere Substanz den höchsten Beitrag zur Minimierung der Gesamtenergie ($\Delta$ G < 0) liefert. Das Mischungsverhältnis von zwei oder mehreren Tensiden ist hierbei für die resultierende Oberflächenspannung eines Gemischs nicht entscheidend, da über einen längeren Zeitraum sich immer dasjenige Tensid an der Grenzfläche anreichert, das die niedrigste Oberflächenspannung aufweist.

Es ist daher überraschend, dass die neuen Tensidmischungen, insbesondere die im Folgenden genannten bevorzugten Tensidmischungen, einen synergistischen Effekt bezüglich der Absenkung der statischen Oberflächenspannung $\gamma_{stat}$. zeigen können.

In den erfindungsgemäßen Tensidmischungen ist mindestens eine der Verbindungen A und mindestens eine der Verbindungen B ein Fluortensid.

Besonders bevorzugte Tensidmischungen der vorliegenden Erfindung sind Mischungen enthaltend mindestens eine Verbindung der Formel (I)

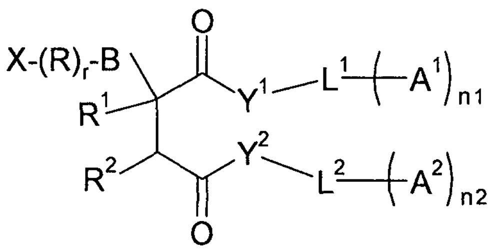

(I)

wobei

X eine hydrophile Gruppe ist,
R = lineares oder verzweigtes Alkylen ist, wobei ein oder mehrere nicht benachbarte C-Atome durch O, S, und/oder N ersetzt sein können,
r = 0 oder 1 ist,
B = eine Einfachbindung, O, NH, NR', $CH_2$, C(O)-O, S, $CH_2$-O, O-C(O), O-C(O)-O, N-C(O), C(O)-N, O-C(O)-N, N-C(O)-N, $SiR'_2$-, $SiR'_2$-O, O-$SO_2$ oder $SO_2$-O ist, wobei R' = lineares oder verzweigtes Alkyl ist,
$R^1$ und $R^2$ = unabhängig voneinander Wasserstoff oder -$CH_2$-$COY^3$-$L^3$-$(A^3)_{n3}$ sind,
$Y^1$, $Y^2$ und $Y^3$ = unabhängig voneinander O, S oder N sind,
$L^1$, $L^2$ und $L^3$ = unabhängig voneinander lineares oder verzweigtes Alkylen sind, wobei ein oder mehrere nicht benachbarte C-Atome durch O, S, und/oder N ersetzt sein können,
$A^1$, $A^2$ und $A^3$ = unabhängig voneinander Wasserstoff oder eine Gruppe der Struktur -$Z^i(CR^3R^4)_{mi}Rf^i$, mit i = 1, 2 oder 3, sind,
$Z^i$ = O, S oder N ist und an ein C-Atom von $L^i$ gebunden ist oder eine Einfachbindung ist,
$R^3$ und $R^4$ unabhängig voneinander Wasserstoff oder eine Alkylgruppe sind,
$Rf^i$ ein fluorhaltiger Rest ist,
n1, n2 und n3 = unabhängig voneinander 1-6 sind,
m1, m2 und m3 = unabhängig voneinander 0-5 sind

und die Verbindungen der Formel (I) mindestens eine $Rf^i$-Gruppe enthalten.

Weiterhin bevorzugt sind Tensidmischungen, die mindestens eine Verbindung der Formel (II) enthalten

$$(RF\text{-}(Spacer)_m)_nM \qquad (II)$$

wobei

RF eine fluorhaltige Gruppe ist,
Spacer eine Einfachbindung oder eine organische funktionelle Kohlenstoffkette ist,
$n \geq 1$ ist,
m = 0-1 und
M eine anionische, kationische, amphotere oder nicht-ionische Gruppe ist.

Insbesondere bevorzugt sind Tensidmischungen, die mindestens eine Verbindung der Formel (I) und mindestens eine Verbindung der Formel (II) enthalten.

Bevorzugte Verbindungen der Formel (I) sind solche, in denen zwei oder drei Rf-Gruppen enthalten sind. Es sind aber auch Verbindungen mit mindestens vier Rf-Gruppen möglich, bevorzugt mit vier, sechs oder neun Rf-Gruppen.

Als fluorierte Gruppen Rf werden bevorzugt verzweigte oder unverzweigte, fluorhaltige Alkylreste, insbesondere perfluorierte Alkylreste, verwendet. Besonders bevorzugt sind fluorhaltige Alkylreste mit 1 bis 10, bevorzugt 1 bis 6, insbesondere 1 bis 4 C-Atomen. Insbesondere bevorzugt werden perfluorierte Rf-Gruppen mit 1 bis 6, insbesondere 1 bis 4 C-Atomen, verwendet. Bevorzugt haben $Rf^1$, $Rf^2$ und $Rf^3$ dieselbe Bedeutung.

Bevorzugt sind $R^1$ und $R^2$ nicht gleichzeitig $-CH_2-COY^3-L^3-(A^3)_{n3}$.

Bevorzugte Verbindungen der Formel (I) sind außerdem solche, in denen $Y^1$, $Y^2$ und $Y^3$ bevorzugt O oder N, insbesondere O bedeuten. Bevorzugt haben $Y^1$ und $Y^2$ oder $Y^1$, $Y^2$ und $Y^3$ dieselbe Bedeutung.

Die Gruppen $Rf^i$ sind über eine Gruppe $-Z^i(CR^3R^4)_{mi}$ an eine Gruppe $L^1$, $L^2$ oder $L^3$ gebunden. $Z^i$ steht hierbei bevorzugt für O oder N, insbesondere für O. Bevorzugt sind Verbindungen, in denen alle $Z^i$ gleich sind.

Bevorzugte Verbindungen der Formel (I) sind solche, in denen n1, n2 und n3 bevorzugt unabhängig voneinander 0-4, insbesondere 1 oder 2 sind.

Bevorzugte Verbindungen der Formel (I) sind auch solche, in denen m1, m2 und m3 bevorzugt unabhängig voneinander 0-4, insbesondere 1-4 sind.

Bevorzugte Verbindungen der Formel (I) sind auch solche, in denen $R^3$ und $R^4$ unabhängig voneinander Wasserstoff oder eine Alkylgruppe mit 1 bis 6 C-Atomen, insbesondere 1-4 C-Atomen sind. $R^3$ und $R^4$ stehen unabhängig voneinander bevorzugt für Wasserstoff oder eine unverzweigte C1-C3-Alkylgruppe. Bevorzugt sind Verbindungen, in denen $R^3$ oder $R^4$ gleich Wasserstoff ist. m1, m2 und m3 stehen bevorzugt unabhängig voneinander für 1-3. Bevorzugt sind Verbindungen, in denen alle $Z^i$, $R^3$, $R^4$ und mi jeweils dieselbe Bedeutung haben.

$L^1$, $L^2$ und $L^3$ können bevorzugt unabhängig voneinander lineares oder verzweigtes Alkylen mit 1 bis 10 C-Atomen sein. Insbesondere sind $L^1$, $L^2$ und $L^3$ unabhängig voneinander lineares oder verzweigtes Alkylen mit 3 bis 8 C-Atomen. Ein oder mehrere nicht benachbarte C-Atome der Gruppen $L^1$, $L^2$ und $L^3$ können bevorzugt durch O oder N ersetzt sein, bevorzugt durch O. In einer bevorzugten Erfindungsvariante sind $L^1$ und $L^2$ gleich. Falls auch $L^3$ vorhanden ist, können bevorzugt $L^1$ und $L^2$ oder $L^1$ und $L^3$ oder $L^2$ und $L^3$ gleich sein. In einer besonders bevorzugten Variante der Erfindung sind alle Gruppen $L^1$, $L^2$ und $L^3$ gleich.

Besonders bevorzugt sind Verbindungen der Formel (I), in denen mindestens eine Gruppe $L^i$ = $-(CR^5R^6)_{ci}(CR^7R^8)_{c'i})_{di}-$ mit den jeweiligen Indizes ci und c'i unabhängig voneinander = 0-10 und di = 0-5 ist, $R^5$ bis $R^8$ unabhängig voneinander Wasserstoff oder eine verzweigte oder unverzweigte Alkylgruppe sind und ci und c'i nicht gleichzeitig = 0 sind.

Insbesondere bevorzugt sind Verbindungen der Formel (I), in denen in mindestens einer Gruppe $L^i$ die Gruppe $R^5$ eine Alkylgruppe mit 1 bis 6 C-Atomen, insbesondere 1-4 C-Atomen, ist und die Gruppen $R^6$ und $R^7$ und $R^8$ = Wasserstoff sind.

Weiterhin bevorzugt sind auch Verbindungen der Formel (I), in denen $R^7$ eine Alkylgruppe mit 1 bis 6 C-Atomen, insbesondere 1-4 C-Atomen, ist und die Gruppen $R^5$ und $R^6$ und $R^8$ = Wasserstoff sind.

In den Verbindungen der Formel (I) steht die Gruppe R bevorzugt für lineares oder verzweigtes Alkylen mit 1 bis 12 Kohlenstoffatomen, insbesondere mit 1 bis 4 Kohlenstoffatomen. Bevorzugt können ein oder mehrere nicht benachbarte C-Atome durch O oder S, bevorzugt O, ersetzt sein.

In den erfindungsgemäßen Verbindungen der Formel (I) kann r bevorzugt gleich 0 sein.

Weiterhin bevorzugt sind Verbindungen der Formel (I), in denen B eine Einfachbindung, O, S, C(O)-O oder O-C(O) ist, insbesondere eine Einfachbindung.

Besonders vorteilhaft sind Verbindungen der Formel (I), in denen eine oder mehrere der Variablen $Rf^i$, $Y^i$, $Z^i$, $L^i$, $R^1$ bis $R^8$, ci, c'i, di, ni, mi, R, r und B die bevorzugten Bedeutungen haben, insbesondere solche Verbindungen, in denen die genannten Variablen die besonders bevorzugten Bedeutungen haben. Besonders vorteilhaft sind Verbindungen der Formel (I), in denen alle die genannten Variablen die bevorzugten, insbesondere die besonders bevorzugten,

Bedeutungen haben.

In den erfindungsgemäßen Verbindungen der Formel (I) ist X eine hydrophile Gruppe, bevorzugt eine anionische, kationische, nicht-ionische oder amphotere Gruppe.

Eine bevorzugte anionische Gruppe X kann ausgewählt sein aus $-COO^-$, $-SO_3^-$, $-OSO_3^-$, $-PO_3^{2-}$, $-OPO_3^{2-}$, $-(OCH_2CH_2)_s-O-(CH_2)_t-COO^-$, $-(OCH_2CH_2)_s-O-(CH_2)t$ $-SO_3^-$, $-(OCH_2CH_2)_s-O-(CH_2)_t-OSO_3^-$, $-(OCH_2CH_2)_s-O-(CH_2)_tPO_3^{2-}$, $-(OCH_2CH_2)_s-O-(CH_2)_tOPO_3^{2-}$ oder aus den Formeln A bis C,

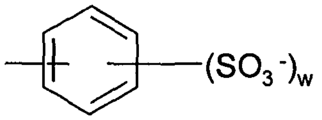

A

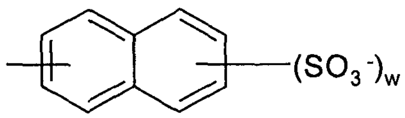

B

oder

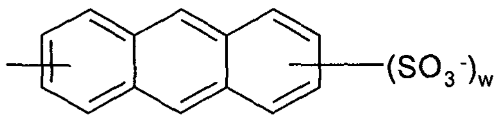

C

wobei s steht für eine ganze Zahl aus dem Bereich von 1 bis 1000, t steht für eine ganze Zahl ausgewählt aus 1, 2, 3 oder 4 und w steht für eine ganze Zahl ausgewählt aus 1, 2 oder 3.

Zu den bevorzugten anionischen Gruppen gehören dabei insbesondere $-COO^-$, $-SO_3^-$, $-OSO_3^-$, $-PO_3^{2-}$, $-OPO_3^{2-}$, die Teilformel A, sowie $-(OCH_2CH_2)_s-O-(CH_2)_t-COO^-$, $-(OCH_2CH_2)_s-O-(CH_2)_t-SO_3^-$ und $-(OCH_2CH_2)_s-O-(CH_2)_t-OSO_3^-$, wobei jede einzelne dieser Gruppen für sich genommen bevorzugt sein kann.

Zu den ganz besonders bevorzugten anionischen Gruppen gehören dabei $-SO_3^-$, $-OSO_3^-$, $-PO_3^{2-}$, oder $OPO_3^{2-}$. Insbesondere eine Sulfonatgruppe $-SO_3^-$ ist bevorzugt.

Bevorzugtes Gegenion für anionische Gruppen X ist ein einwertiges Kation, insbesondere $H^+$, ein Alkalimetall-Kation oder $NR_4^+$, wobei R = H oder C1 - C6-Alkyl ist und alle R gleich oder verschieden sein können. Insbesondere bevorzugt sind $Na^+$, $K^+$ und $NH_4^+$, besonders bevorzugt $Na^+$.

Eine bevorzugte kationische Gruppe X kann ausgewählt sein aus $-NR^1R^2R^{3+}$ $Z^-$, $-PR^1R^2R^{3+}$ $Z^-$,

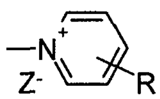 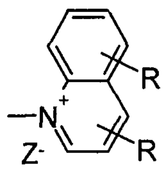 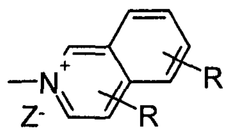

wobei R steht für H oder $C_{1-4}$-Alkyl in beliebiger Position,

$Z^-$ steht für $Cl^-$, $Br^-$, $I^-$, $CH_3SO_3^-$, $CF_3SO_3^-$, $CH_3PhSO_3^-$, $PhSO_3^-$
$R^1$, $R^2$ und $R^3$ jeweils unabhängig voneinander stehen für H, $C_{1-30}$-Alkyl, Ar oder $-CH_2Ar$ und
Ar steht für einen unsubstituierten oder ein- oder mehrfach substituierten aromatischen Ring oder kondensierte Ringsysteme mit 6 bis 18 C-Atomen, worin auch ein oder zwei CH-Gruppen durch N ersetzt sein können.

Zu den bevorzugten kationischen Gruppen gehören dabei insbesondere $-NR^1R^2R^{3+}$ Z und

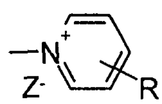

wobei jede einzelne dieser Gruppen für sich genommen bevorzugt sein kann.

Eine bevorzugte nicht-ionische Gruppe kann ausgewählt sein aus lineares oder verzweigtes Alkyl, wobei ein oder mehrere nicht benachbarte C-Atome durch O, S, und/oder N ersetzt sein können, -OH, -SH, -O-(Glycosid)$_o$, -S-(Glycosid)$_o$, -$OCH_2$-CHOH-$CH_2$-OH, -$OCH_2$Ar(-NCO)$_p$, -OAr(-NCO)$_p$, -CR=$CH_2$, -OCOCR=$CH_2$, Aminoxid

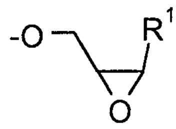
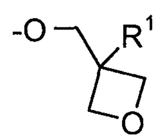

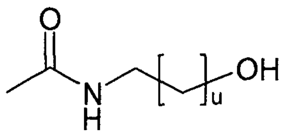
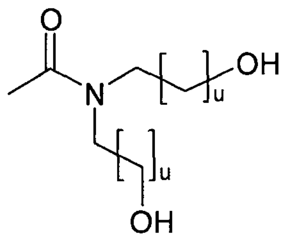
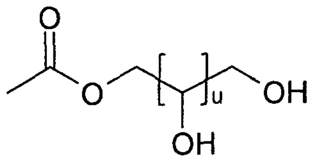

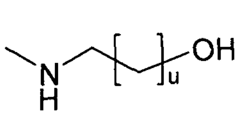
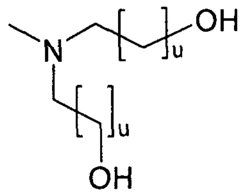
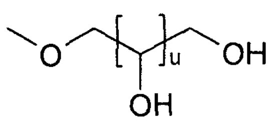

u steht für eine ganze Zahl aus dem Bereich von 1 bis 6, bevorzugt 1 bis 4 o steht für eine ganze Zahl aus dem Bereich von 1 bis 10,
p steht für 1 oder 2,
$R^1$, $R^2$ und $R^3$ stehen jeweils unabhängig voneinander für $C_{1-30}$-Alkyl, Ar oder -$CH_2$Ar, bevorzugt $C_{1-20}$-Alkyl, und,
Ar steht für einen unsubstituierten, ein- oder mehrfach substituierten aromatischen Ring oder kondensierte Ringsysteme mit 6 bis 18 C-Atomen, worin auch ein oder zwei CH-Gruppen durch C=O ersetzt sein können und, Glycosid steht für ein verethertes Kohlenhydrat, vorzugsweise für ein mono-, di-, tri- oder oligo-Glucosid,

und R steht für H oder Methyl.

Zu den bevorzugten nicht-ionischen Gruppen gehören dabei insbesondere lineares oder verzweigtes Alkyl, wobei ein oder mehrere nicht benachbarte C-Atome durch O, S und/oder N ersetzt sein können, -OH, -OCOCR=$CH_2$ und -O-(Glycosid)$_o$.

Wenn X = Alkyl, wobei ein oder mehrere nicht benachbarte C-Atome durch O, S, und/oder N ersetzt sind, dann ist es bevorzugt gleich R-(B-A)$_m$- mit R = H oder $C_{1-4}$-A)ky), insbesondere H oder $CH_3$, A = lineares oder verzweigtes Alkylen, bevorzugt mit 1 bis 10 Kohlenstoffatomen, insbesondere mit 1 bis 4 Kohlenstoffatomen, B = O oder S, bevorzugt O, und m = eine ganze Zahl bevorzugt aus dem Bereich von 1 bis 100, besonders bevorzugt 1 bis 30.

Insbesondere bevorzugt als nicht-ionische Gruppe X ist die Gruppe R-(O-$CH_2$CHR)$_m$- mit m = eine ganze Zahl aus dem Bereich von 1 bis 100, bevorzugt 1 bis 30, insbesondere 1-15, und R = H oder $C_{1-4}$-Alkyl, insbesondere H oder $CH_3$. Insbesondere bevorzugt ist R-(B-A)$_m$- eine Polyethylen- oder Polypropylenglykoleinheit.

Eine bevorzugte amphotere Gruppe kann ausgewählt sein aus den funktionellen Gruppen der Acetyldiamine, der N-Alkylaminosäuren, der Betaine, bzw. entsprechender Derivate, insbesondere ausgewählt aus:

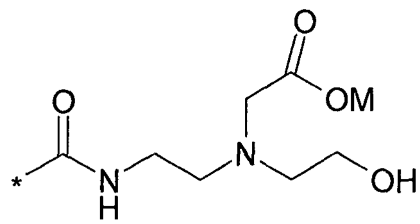

(fortgesetzt)

| |
|---|
| 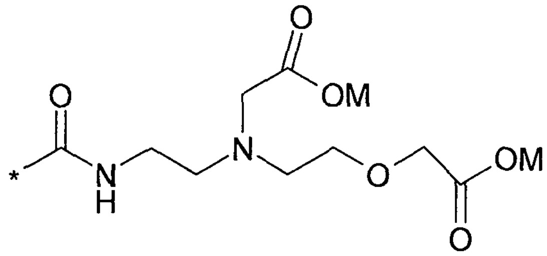 |
| 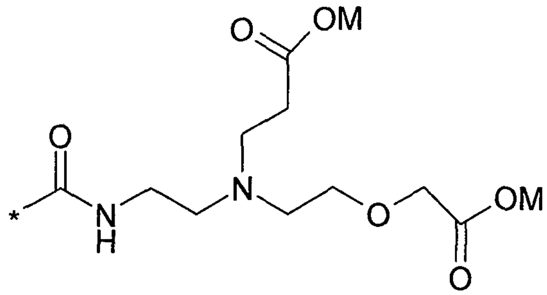 |
| -NH-$CH_2$-COOM; -NH-$CH_2$-$CH_2$-COOM |
| 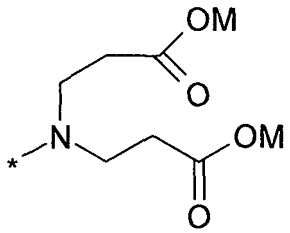 |
| -[(C(=0O)-NH-$(CH_2)_{(1-8)}$](0 oder 1)-$N^+R^1R^2$-$CH_2$-$COO^-$, wobei $R^1$ und $R^2$ jeweils unabhängig voneinander stehen für einen C1-8-Alkylrest, vorzugsweise Methyl oder Ethyl |
| -C(=O)-NH-$(CH_2)_{1-3}$-$N^+R^1$ $R^2$-$CH_2$-CH(OH)-$CH_2$-$(O)_{(0\ oder\ 1)}$-(S oder P)$O_3^-$, wobei $R^1$ und $R^2$ jeweils unabhängig voneinander stehen für einen C1-8-Alkylrest, vorzugsweise Methyl oder Ethyl |

Besonders bevorzugte erfindungsgemäße Verbindungen sind solche, die als hydrophile Gruppe X eine der bevorzugten anionischen Gruppen X, der bevorzugten nicht-ionischen Gruppen oder der bevorzugten zwitterionischen Gruppen enthalten.

Insbesondere bevorzugt sind Verbindungen, die die Gruppen -$SO_3^-$, -$OSO_3^-$, -$PO_3^{2-}$ oder $OPO_3^{2-}$, Polyethylen- oder Polypropylenglykole, Betaine, oder Sulfobetaine, insbesondere -$SO_3^-$, enthalten. Bevorzugte Gegenionen sind hierbei $Na^+$, $K^+$ und $NH_4^+$, insbesondere $Na^+$.

Besonders vorteilhaft werden in den neuen Tensidmischungen solche Verbindungen der Formel (I) eingesetzt, in denen X eine anionischen Gruppe ist, insbesondere -$SO_3^-$, und eine oder mehrere der Variablen $Rf^i$, $Y^i$, $Z^i$, $L^i$, $R^1$ bis $R^8$, ci, c'i, di, ni, mi, R, r und B die beschriebenen bevorzugten Bedeutungen haben, insbesondere solche Verbindungen, in denen die genannten Variablen die besonders bevorzugten Bedeutungen haben. Bevorzugte Verbindungen sind hierbei insbesondere solche Verbindungen, in denen alle Variablen die bevorzugten Bedeutungen, insbesondere die besonders bevorzugten Bedeutungen, haben.

In einer Ausgestaltung der Erfindung können die Verbindungen der Formel (I) als Gemische vorliegen, in denen die einzelnen Verbindungen unterschiedliche Bedeutungen für die Variablen besitzen, insbesondere für $A^i$, $Rf^i$, $Y^i$, $Z^i$, $L^i$, $R^1$ bis $R^8$, ci, c'i, di und mi.

In einer besonders bevorzugten Gruppe von Verbindungen der Formel (I) stehen $R^1$ und $R^2$ für Wasserstoff und $A^1$ und $A^2$ für eine -$Z^i(CR^3R^4)_{mi}Rf^i$-Gruppe. Diese Verbindungen werden durch Formel (III) dargestellt. Besonders bevorzugt sind Verbindungen der Formel (III) mit $Y^1$, $Y^2$, $Z^1$ und $Z^2$ gleich O.

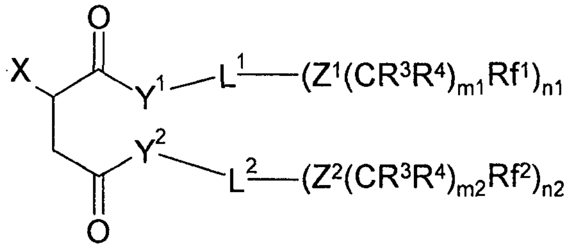

(III)

In einer anderen bevorzugten Gruppe von Verbindungen der Formel (I) stehen $R^1$ für H, $R^2$ für $-CH_2-COY^3-L^3-(A^3)_{n3}$ und $A^1$, $A^2$ und $A^3$ für eine $-Z^i(CR^3R^4)_{mi}Rf^i$-Gruppe. Diese Verbindungen werden durch Formel (IV) dargestellt. Besonders bevorzugt sind Verbindungen der Formel (IV) mit $Y^1$, $Y^2$, $Y^3$, $Z^1$, $Z^2$ und $Z^3$ gleich O.

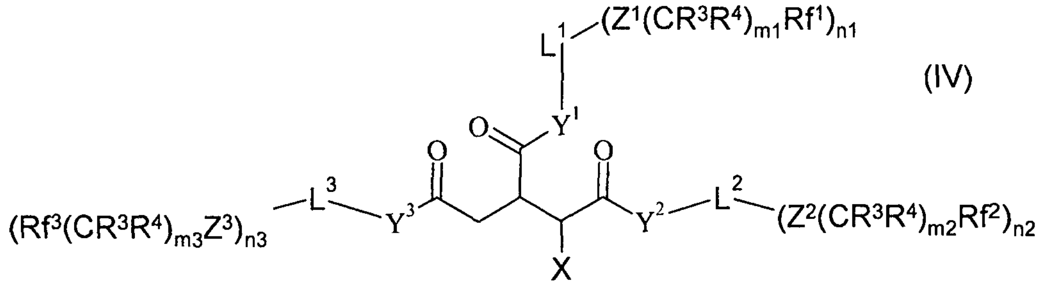

(IV)

In einer weiteren bevorzugten Gruppe von Verbindungen der Formel (I) stehen $R^1$ für $-CH_2-COY^3-L^3-(A^3)_{n3}$, $R^2$ für Wasserstoff und $A^1$, $A^2$ und $A^3$ für eine $-Z^i(CR^3R^4)_{mi}Rf^i$-Gruppe. Diese Verbindungen werden durch Formel (V) dargestellt. Besonders bevorzugt sind Verbindungen der Formel (V) mit $Y^1$, $Y^2$, $Y^3$, $Z^1$, $Z^2$ und $Z^3$ gleich O.

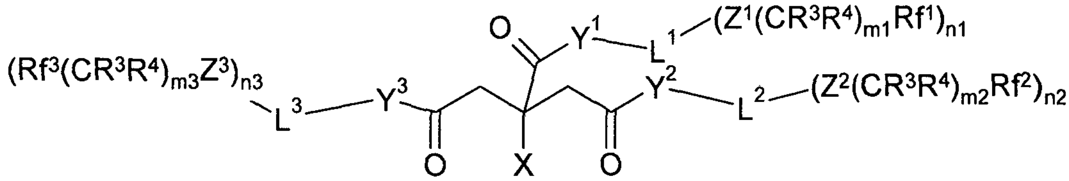

(V)

Besonders bevorzugte erfindungsgemäße Verbindungen sind Verbindungen der Formeln (III), (IV) und (V), in denen X eine anionische Gruppe ist. Insbesondere bevorzugt sind Verbindungen der Formeln (III), (IV) und (V), die die Gruppen $-SO_3^-$, $-OSO_3^-$, $-PO_3^{2-}$ oder $OPO_3^{2-}$, insbesondere $-SO_3^-$, enthalten. Bevorzugte Gegenionen sind hierbei $Na^+$, $K^+$ und $NH_4^+$, insbesondere $Na^+$.

In den Formeln (III), (IV) und (V) haben $L^1$, $L^2$ und $L^3$ die für die Formel (I) genannten allgemeinen und bevorzugten Bedeutungen. Bevorzugt sind $L^1$, $L^2$ und $L^3$ unabhängig voneinander gleich lineares oder verzweigtes C1 - C10-Alkylen, insbesondere lineares oder verzweigtes C3 - C8-Alkylen, bevorzugt gleich lineares oder verzweigtes C3 - C6-Alkylen. Insbesondere sind Verbindungen der Formeln (III), (IV) und (V) bevorzugt, in denen alle L gleich sind.

Bevorzugt sind außerdem Verbindungen der Formeln (III), (IV) und (V) mit perfluorierten Gruppen $Rf^i$ mit 1 bis 4 C-Atomen. Bevorzugt haben $Rf^1$, $Rf^2$ und $Rf^3$ dieselbe Bedeutung.

In den Formeln (III), (IV) und (V) sind n1, n2 und n3 bevorzugt unabhängig voneinander 1 oder 2. m1, m2 und m3 sind bevorzugt unabhängig voneinander 1-4.

Bevorzugte Verbindungen der Formeln (III), (IV) und (V) sind auch solche, in denen $R^3$ und $R^4$ unabhängig voneinander Wasserstoff oder eine Alkylgruppe mit 1 bis 3 C-Atomen.

In einer bevorzugten Variante sind $R^3$ und $R^4$ gleich. Weiter bevorzugt sind Verbindungen, in denen $R^3$ oder $R^4$ gleich Wasserstoff sind und m1, m2 und m3 gleich 1-3 sind.

Bevorzugt sind Verbindungen, in denen alle $Rf^i$, $R^3$, $R^4$, ni und mi jeweils dieselbe Bedeutung haben.

Besonders bevorzugt sind Verbindungen der Formeln (III), (IV) und (V), in denen alle Variablen die bevorzugten Bedeutungen, insbesondere die besonders bevorzugten Bedeutungen haben.

Beispiele von Verbindungen der Formel (I), deren Verwendung in den neuen Tensidmischungen besonders vorteilhaft ist, sind Verbindungen der Formeln (IV-1) und (IV-2), wobei * den jeweiligen Anknüpfungspunkt angibt:

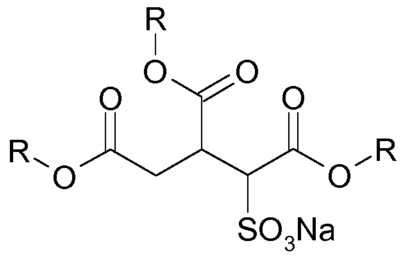

R =

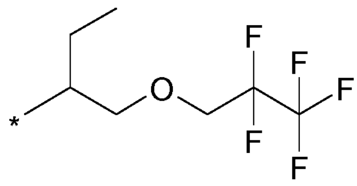

(IV-1)

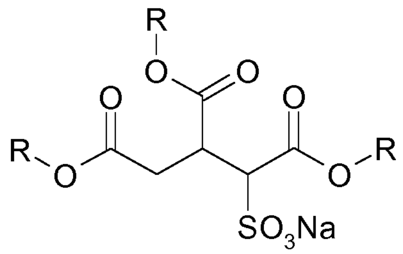

R =

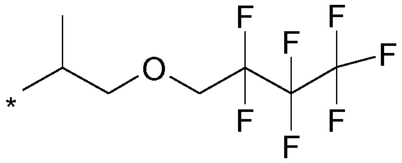

(IV-2)

Die Verbindungen der Formeln (IV-1) und (IV-2) und deren Verwendung als Tenside allgemein bzw. in den im Folgenden beschriebenen Einsatzgebieten und entsprechenden Mittel enthaltend die Verbindungen sind auch Gegenstand der vorliegenden Erfindung.

Die erfindungsgemäßen Verbindungen gemäß den Formel (I) können auch als Isomerengemische (Konstitutions- und/oder Konfigurationsisomerengemische) vorliegen. Insbesondere Diastereomeren- und/oder Enantiomerengemische sind möglich.

Die erfindungsgemäßen Verbindungen der Formel (I) können bevorzugt durch Veresterung von Maleinsäure und Aconitsäure bzw. deren Anhydriden oder Säurechloriden mit einem oder mehreren Alkoholen der Formel (VI)

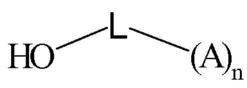

(VI)

und anschließende Addition an die Doppelbindung zur Einführung der Gruppierung X-$(R)_r$-B hergestellt werden. Die erfindungsgemäßen Verbindungen können auch bevorzugt durch Veresterung von Hydroxybernsteinsäure und Zitronensäure mit einem oder mehreren Alkoholen der Formel (VI) und anschließende Funktionalisierung der Hydroxygruppen zur Einführung der Gruppierung X-$(R)_r$-B hergestellt werden.

L und A haben in der Formel (VI) die für $L^1$, $L^2$ und $L^3$ bzw. $A^1$, $A^2$ und $A^3$ in Formel (I) beschriebene Bedeutung, insbesondere auch die bevorzugten Bedeutungen. Die Alkohole der Formel (VI) können eine oder mehrere Rf-Gruppen enthalten.

Die verwendeten Alkohole sind kommerziell erhältlich und/oder ihre Herstellung ist dem Fachmann geläufig (z. B. DE 10 2009 030 846 A1; Heilmann et al. J. Fluorine Chem. 1992, 59, 387; Janulis et al. US 5,157,159 (1992); Carbohydrate Research 1991, 219, 33).

Die Synthese erfindungsgemäßer Succinate bzw. Tricarballylate erfolgt bevorzugt in einer zweistufigen Synthese über die entsprechenden Maleate oder Hydroxysuccinate bzw. die entsprechenden Aconit- oder Zitronensäureester. Diese Synthesen sind in WO 2010/003567, WO 2010/149262, WO 2011/082770 und WO 2012/084118 beschrieben. Die Offenbarungen in den zitierten Literaturstellen gehören hiermit ausdrücklich auch zum Offenbarungsgehalt der vorliegenden Anmeldung.

Bevorzugte Verbindungen der Formel (II) sind solche, in denen RF eine perfluorierte Alkylgruppe mit mindestens zwei C-Atomen, bevorzugt drei, insbesondere vier C-Atomen ist. Insbesondere bevorzugt sind Substanzen, die über

eine perfluorierte C6-Kette verbunden mit einem Ethylrest verfügen.

Die Spacer Gruppe kann bevorzugt eine organische funktionelle Kohlenwasserstoffkette sein, z. B. ein lineares oder verzweigtes Alkylen, wobei ein oder mehrere nicht benachbarte C-Atome durch O, S, und/oder N ersetzt sein können.

Weiter bevorzugt sind Verbindungen der Formel (II), in denen die Gruppierung (RF-(Spacer)$_m$)$_n$- gleich $C_{n'}F_{2n'+1}$-, $C_nF_{2n'+1}$-$CH_2CH_2$-, $C_{n'}F_{2n'+1}$-$OCF_2CF_2$-, $C_{n'}F_{2n'+1}$-$OC_6H_4$-, $C_{n'}F_{2n'+1}$-C(O)NH$(CH_2)_3$N=, $C_{n'}F_{2n'+1}$-$SO0_2NH(CH_2)_3N$=, $CF_3CCl_2(CF_2CFCl)_{n-1}$-$CF_2$- oder $C_8F_{17}CH_2CH_2Si(CH_3)_2$- ist mit n' = 4-12. Besonders bevorzugt ist die Gruppierung $C_{n'}F_{2n'+1}$-$CH_2CH_2$- mit n' = 4-8.

Bevorzugte anionische Gruppen M sind -$OPOO^-$, -$COO^-$, -$SO_3^-$, -$OSO_3^-$, -OP(O)($O^-$)O- und -OP(O)$O_2^{2-}$. Als Gegenionen werden hierbei bevorzugt $H^+$, $Na^+$, $K^+$, $Li^+$ oder $NH_4^+$ verwendet.

Besonders bevorzugt sind Verbindungen der Formel (II-a)

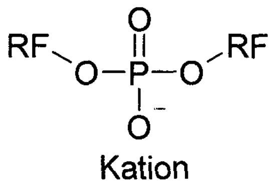

(II-a)

wobei RF = $CF_3$-$(CF_2)_n$-Spacer- ist, mit n = 0-12, und Kation = Na, K, Li, $NH_4$. Spacer hat die vorstehend angegebene Bedeutung.

Bevorzugte kationische Gruppen M sind -$NR_3^+$ Gruppen mit R = C1-C4 Alkyl.

Bevorzugte amphotere Gruppen M sind -$NR_2^+$-$(CH_2)_y$-$COO^-$ Gruppen mit R = C1-C4 Alkyl und y = 1-3, bevorzugt y=1.

Bevorzugte nicht-ionische Gruppen M sind $(OCH_2CH_2)_n$-OR und -$(OCH_2(CH_3)CH_2)_n$-OR mit n = 4 - 40 und R = H oder C1-C4 Alkyl.

Bevorzugte Verbindungen der Formel (II) sind insbesondere solche Verbindungen, in denen alle Variablen die bevorzugten Bedeutungen haben. Bevorzugt sind anionische Fluortenside z.B. auf der Basis von Phosphorsäure-, Carboxyl- und Sulfonsäuregruppen. Insbesondere bevorzugt sind Verbindungen der Formel (II), in denen M eine anionische Gruppe ist und die Gruppierung (RF-(Spacer)$_m$)$_n$- gleich $C_{n'}F_{2n+1}$-$CH_2CH_2$-mit n = 4-8 ist. Besonders bevorzugte Verbindungen sind hierbei Phosphorsäureester der Formel (II-a), spezielle solche mit $NH_4^+$ als Gegenion.

Die in den neuen Tensidmischungen eingesetzten Verbindungen der Formel (II) sind dem Fachmann bekannt. Sie können in Analogie zu bekannten Syntheseverfahren hergestellt werden oder sind kommerziell erhältlich. Die besonders bevorzugt verwendeten Phosphorsäureester sind z. B. unter dem Handelsnamen Chemguard® von der Firma Chemguard erhältlich, z. B. Chemguard® S760-P.

Die neuen Tensidmischungen können auch mindestens ein Sulfosuccinat, bevorzugt der Formel (VII), enthalten

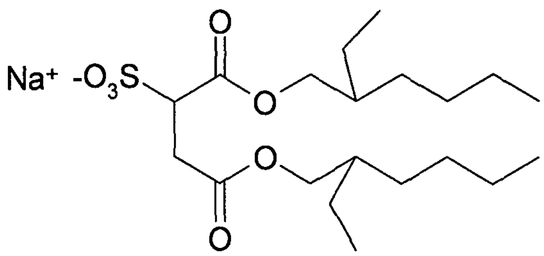

(VII)

Die neuen Tensidmischungen können auch mindestens ein funktionelles Polymer auf der Basis von Polymethylsiloxan, bevorzugt der Formel (VIII), enthalten

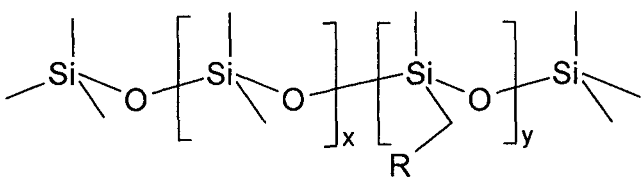

(VIII)

wobei x = 1-500, y = 1-500 und R = phenyl, methyl oder -(O-$C_2H_3R'$)$_{n''}$-OR" ist, mit n" = 1-1000, R' = lineare und verzweigte Alkylrest und R" = lineare und verzeigte Alkylreste.

Die neuen Tensidmischungen können auch mindestens ein Trisiloxan-Derivat, bevorzugt der Formel (IX), enthalten

$$M_2(D'E_{n'''})PM \qquad (IX)$$

wobei M = $(CH_3)_3SiO$-, D' = $Si(CH_3)(R''')$, E = $OCH_2CH_2$, n''' = 5 - 40 und P = OH, OMe, oder OAc ist, mit R''' = lineare und/oder verzweigte Alkylkette. Insbesondere bevorzugt ist die folgende Verbindung

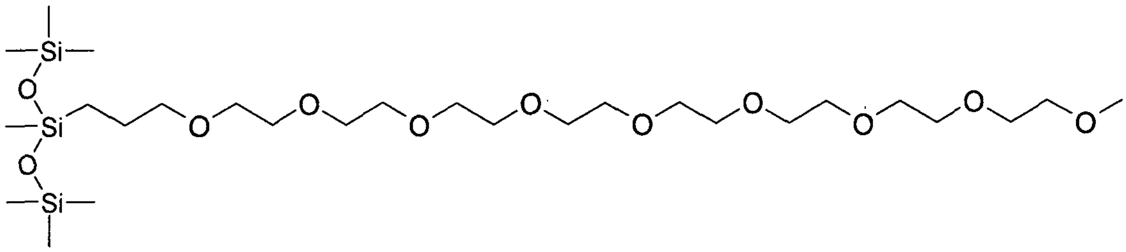

Die neuen Tensidmischungen können auch mindestens ein Gemini-Tensid enthalten, wobei zwei identische oder verschiedene amphiphile Gruppen, die aus Strukturen konventioneller Tenside aufgebaut sind, durch einen Spacer verbunden sind. Insbesondere bevorzugt sind z.B. Diacetylenderivate der Formel (X)

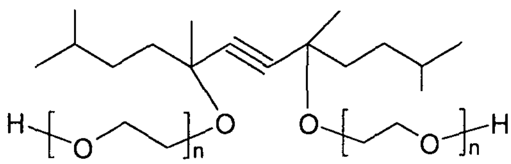

(X)

wobei n = 1-100 ist.

Bevorzugt können die Tensidmischungen der Erfindung Verbindungen der Formel (I) als Verbindungen A und Verbindungen der Formeln (II) - (X) als Verbindungen B, insbesondere solche der Formel (II), enthalten.

Bevorzugte Tensidmischungen der Erfindung enthalten die vorgehend beschriebenen bevorzugten Verbindungen der Formel (I) und die vorgehend beschriebenen bevorzugten Verbindungen der Formel (II). In einer anderen bevorzugten Variante der Erfindung enthalten die Tensidmischungen Verbindungen der Formel (I) sowohl als Verbindungen A als auch als Verbindungen B.

Insbesondere bevorzugt sind Tensidmischungen mit Fluortensiden der Formeln (III), (IV) und (V), insbesondere der Formeln (IV-1) und/oder (IV-2), bevorzugt in Kombination mit den genannten bevorzugten Phosphorsäureestern.

Neben den Verbindungen A und B bzw. bevorzugt den Verbindungen der Formeln (I) und (II) können die erfindungsgemäßen Mischungen auch Lösemittel, Additive, Hilfs- und Füllstoffe sowie nicht fluorierte Tenside enthalten. Beispielhaft seien genannt: Silikonpartikel und oberflächenmodifizierte Pigmente, Weichmacher.

Die neuen Tensidmischungen enthalten die Verbindungen A und B bevorzugt im Verhältnis A/B von 10:90 bis 90:10, bevorzugt 70/30 bis 90/10, insbesondere im Verhältnis von 80/20 bis 85/15 (Gewichtsverhältnis). Besonders bevorzugt enthalten die neuen Tensidmischungen die Verbindungen der Formeln (I) und (II) im Verhältnis von 10:90 bis 90:10, bevorzugt 70/30 bis 90/10, insbesondere im Verhältnis von 80/20 bis 85/15 (Gewichtsverhältnis).

Der Gehalt der Verbindungen A und B bzw. der Verbindungen der Formeln (I) und (II) in lösemittelhaltigen Tensidmischungen beträgt üblicherweise 5 - 50 Gew.-%, bevorzugt 30-35 Gew.-% bezogen auf die gesamte Tensidmischung.

Bevorzugt enthalten die Mischungen die Verbindungen (I) und (II) und ein Lösemittel. Besonders bevorzugt bestehen die Mischungen aus Verbindungen (I) und (II) und einem Lösemittel oder Lösemittelgemisch. Hierbei werden insbesondere die als bevorzugt beschriebenen Verbindungen und Lösemittel eingesetzt, bevorzugt in den genannten Mengen und Gewichtsverhältnissen.

Es ist ein besonderer Vorteil der erfindungsgemäßen Tensidmischungen, dass sie die Absenkung der statischen Oberflächenspannung $\gamma_{stat}$. bei möglichst geringer Einsatzkonzentration (0,01 - 1,0 Gew.-% bezogen auf die gesamte

Formulierung, z.B. eine Lackformulierung) der Tenside ermöglichen. Überraschend zeigen die neuen Tensidmischungen zudem einen synergistischen Effekt bezüglich der Absenkung der statischen Oberflächenspannung $\gamma_{stat}$. Ein wesentliches Charakteristikum der erfindungsgemäßen Tensidmischungen ist somit, dass die statische Oberflächenspannung $\gamma_{stat}$. der Tensidmischungen niedriger als die statischen Oberflächenspannungen $\gamma_{stat}$. der einzelnen Tenside der Formeln (I) und (II) ist. Besonders bevorzugte Tensidmischungen mit einem synergetischen Effekt enthalten mindestens eine Verbindung der Formeln (III), (IV) und/oder (V) und mindestens eine Verbindung der Formel (II) aus der Klasse der Phosphorsäureester. Es können in unterschiedlichen Mischungsverhältnissen synergetische Effekt im Bereich 0,4 - 1,9 mN/m erzielt werden. Die neuen Tensidmischungen können zudem weitere Vorteile aufweisen wie z. B. biologische und/oder abiotische Abbaubarkeit der Substanzen ohne Bildung persistenter perfluorierter Abbauprodukte wie PFOA (Perfluoroctansäure) oder PFOS (Perfluoroctansulfonsäure), schwache Schaumbildung, gute Verarbeitbarkeit in Formulierungen und/oder Lagerstabilität.

Ein zweiter Gegenstand der vorliegenden Erfindung ist die Verwendung von Tensidmischungen gemäß Anspruch 1 und den vorstehend beschriebenen bevorzugten Ausführungsformen als oberflächenaktive Mittel, beispielsweise zur Verbesserung des Verlaufsverhaltens und des Benetzungsvermögens von Coatingformulierungen. Tensidmischungen, die Fluortenside der Formeln (III), (IV) und (V) in Kombination mit den genannten bevorzugten Phosphorsäureestern enthalten, werden bevorzugt verwendet, insbesondere solche, die aus diesen Komponenten und einem Lösemittel oder Lösemittelgemisch bestehen.

Einsatzgebiete sind beispielsweise die Verwendung der erfindungsgemäßen Tensidmischungen und Tenside als Additive in Zubereitungen zur Oberflächenbeschichtung, wie Farben, Lacken, Schutzanstrichen, Spezialcoatings in elektronischen oder Halbleiter-Anwendungen (z.B. Photolacken, Top Antireflective Coatings, Bottom Antireflective Coatings) oder in optischen Anwendungen (z.B. photographischen Beschichtungen, Beschichtungen optischer Elemente), in Agrochemikalien, in Poliermitteln und Wachsen, z.B. für Mobiliar, Fußböden und Automobile, insbesondere in Bodenpolituren, in Klebstoffen, in Feuerlöschmitteln, Schmierstoffen, Wasch- und Reinigungsmitteln, Enteisern oder in photolithographischen Verfahren, insbesondere in Immersionsphotolithographie-Verfahren, z.B. in Entwicklerlösungen, Spüllösungen, Immersionsölen und/oder in den Photoresists selbst, vor allem zur Herstellung von gedruckter Schaltungen wie z.B. IC, LSI, VLSI und ULSI, oder in Additivzubereitungen zur Additivierung entsprechender Zubereitungen.

Dabei werden die erfindungsgemäßen Tensidmischungen und Tenside für die Anwendung üblicherweise in entsprechend ausgelegten Zubereitungen eingebracht. Entsprechende Mittel, enthaltend die erfindungsgemäßen Tensidmischungen und Tenside, sind ebenfalls Gegenstand der vorliegenden Erfindung. Bevorzugt enthalten solche Mittel einen für den jeweiligen Verwendungszweck geeigneten Träger, sowie gegebenenfalls weitere Aktivstoffe und/oder gegebenenfalls Hilfsstoffe. Bevorzugte Mittel sind Farb- und Lackzubereitungen, Klebstoffe, Feuerlöschmittel, Schmierstoffe, Wasch- und Reinigungsmittel und Enteiser oder Entwicklerlösungen, Spüllösungen, Immersionsöle und Photoresists für photolithograqphische Verfahren, Agrochemikalien, Bodenpolituren oder Hydrophobiermittel zur Textilausrüstung oder Glasbehandlung. Bei bevorzugten Mitteln handelt es sich dabei um Farb- und Lackzubereitungen und Druckfarben.

Außerdem sind auch wasserbasierte Lackformulierungen, die die erfindungsgemäßen Tensidmischungen und Tenside allein oder im Gemische mit Additiven enthalten, Gegenstand der vorliegenden Erfindung. Bevorzugt werden Zubereitungen, z.B. Lackformulierungen auf Basis der folgenden synthetischen Filmbildner verwendet: Polykondensationsharze wie Alkydharze, gesättigt/ungesättigte Polyester, Polyamide/imide, Silikonharze, Phenolharze, Harnstoffharze und Melaminharze, Polyadditionsharze wie Polyurethane und Epoxidharze, Polymerisationsharze wie Polyolefine, Polyvinylverbindungen und Polyacrylate.

Außerdem sind die erfindungsgemäßen Tensidmischungen und Tenside auch zum Einsatz in Lacken auf Basis von Naturstoffen und modifizierten Naturstoffen geeignet. Bevorzugt sind Lacke auf Basis von Ölen, Polysacchariden wie Stärke und Cellulose als auch auf Basis von Naturharzen wie cyclischen Oligoterpenen, Polyterpenen und/oder Schellack.

Die erfindungsgemäßen Tensidmischungen und Tenside können sowohl in physikalisch härtenden (Thermoplaste) als auch in vernetzenden (Elastomere und Duromere) wässrigen Lacksystemen verwendet werden. Bevorzugt verbessern die erfindungsgemäßen Tensidmischungen und Tenside die Verlaufs- und Benetzungseigenschaften der Lacksysteme.

Alle hier genannten Verwendungen erfindungsgemäß einzusetzender Tensidmischungen bzw. Tenside sind Gegenstand der vorliegenden Erfindung. Die jeweilige Anwendung von Tensidmischungen bzw. Tensiden zu den genannten Zwecken ist dem Fachmann bekannt, so dass der Einsatz der erfindungsgemäß einzusetzenden Tensidmischungen und Tenside keine Probleme bereitet.

Die vollständigen Offenbarungen aller aufgeführten Anmeldungen und Veröffentlichungen sind durch Bezugnahme in diese Anmeldung eingeführt. Für die vorliegende Erfindung bedeutet sowohl die Pluralform eines Begriffs als auch die Singularform eines Begriffs auch die jeweils andere Form, soweit nicht ausdrücklich anderes angegeben ist. Alle Merkmale der vorliegenden Erfindung können in jeder Art miteinander kombiniert werden, es sei denn, dass sich bestimmte Merkmale ausschließen. Dies gilt vor allem für bevorzugte und besonders bevorzugte Merkmale. Weitere

Merkmale, Vorteile und Varianten der Erfindung ergeben sich auch aus den Ansprüchen und Beispielen. Die folgenden Beispiele erläutern die vorliegende Erfindung näher, ohne den Schutzbereich zu beschränken.

## Beispiele

### Bestimmung der statischen Oberflächenspannung

Es werden die statischen Oberflächenspannungen $\gamma_{stat}$. von wässrigen Tensidlösungen mit verschiedenen Konzentrationen c (Gramm pro Liter) bestimmt.

Gerät: Tensiometer der Firma Dataphysics (Modell DCAT 11)
Temperatur der Messlösungen: 20°±0,2°C
Eingesetzte Messmethode: Messung der Oberflächenspannung mit der Wilhelmy Plattenmethode nach DIN EN 14370.
Platte: Platin, Länge= 19,9mm

Bei der Plattenmethode wird die Oberflächen- bzw. Grenzflächenspannung der Tensidlösung aus der auf die benetzte Länge einer Platte wirkenden Kraft nach folgender Formel berechnet.

$$\gamma = \frac{F}{L \cdot \cos\theta} = \frac{F}{L}$$

y= Grenz- oder Oberflächenspannung; F= auf die Waage wirkende Kraft; L= benetzte Länge (19,9 mm); θ= Kontaktwinkel

Die Platte besteht aus angerautem Platin und wird also optimal benetzt, so dass der Kontaktwinkel θ nahe bei 0° liegt. Der Term cos θ erreicht daher annähernd den Wert 1, so dass nur noch die gemessene Kraft und die Länge der Platte berücksichtigt werden müssen.

### Bestimmung der dynamischen Oberflächenspannung

Es wird die dynamische Oberflächenspannung $\gamma_{dyn}$. einer 0.1%igen (Gewichtsprozent) wässrigen Lösung der zu untersuchenden Verbindung bestimmt.

Eingesetzte Messmethode: Messung der Oberflächenspannung mit der Blasendruckmethode
Gerät: Tensiometer der Firma SITA (Modell t 60)
Temperatur der Messlösungen: 20°C ± 0,2°C

Bei der Messung der dynamischen Oberflächenspannung $\gamma_{dyn}$. werden Luftblasen mit verschiedenen Geschwindigkeiten durch eine Kapillare in die Tensidlösung gedrückt. Aus der dabei auftretenden Druckänderung kann die Oberflächenspannung in Abhängigkeit von der Blasenlebensdauer mit folgender Gleichung bestimmt werden:

$$\gamma = \frac{r(p_{max} - \rho \cdot g \cdot h)}{2}$$

$p_{max}$= Maximaldruck, ρ= Dichte der Flüssigkeit, h= Eintauchtiefe, r= Radius der Kapillare

### Beispiel 1: Synthese der Verbindung der Formel (IV-1)

Gemäß der Patentanmeldung DE 10 2009 030 846 A1 wird der kettenverlängerte Alkohol aus den Edukten 2,2,3,3,3-Pentafluoro-propan-1-ol (ABCR) und Butylencarbonat (TCI) hergestellt. Dieses Zwischenprodukt wird nach der beschriebenen Synthesevorschrift mit Aconitsäure (Alfa Aesar) verestert und dann im letzten Reaktionschritt mittels einer wäßrigen Natriumhydrogensulfit-Lösung (Merck) sulfoniert. Die dynamische Oberflächenspannung $\gamma_{dyn}$. wird nach der angegebenen Methode bestimmt und beträgt 28,2 mN/m (100 ms, 0,1 Gew.-%).

**Beispiel 2: Synthese der Verbindung der Formel (IV-2)**

Gemäß der Patentanmeldung DE 10 2009 030 846 wird der kettenverlängerte Alkohol aus den Edukten 2,2,3,3,4,4,4-Heptafluoro-butan-1-ol (ABCR) und Propylencarbonat (Merck VWR) hergestellt. Dieses Zwischenprodukt wird nach der beschriebenen Synthesevorschrift mit Aconitsäure verestert und dann im letzten Reaktionsschritt mittels einer wässrigen Natriumhydrogensulfit-Lösung sulfoniert. Die dynamische Oberflächenspannung $\gamma_{dyn}$. wird nach der angegebenen Methode bestimmt und beträgt 66,6 mN/m (100 ms, 0,1 Gew.-%). Die statische Oberflächenspannung $\gamma_{stat}$. wird nach der angegebenen Methode bestimmt und beträgt 17,7 mN/m.

**Beispiel 3: Herstellung erfindungsgemäßer Tensidmischungen und Bestimmung der statischen Oberflächenspannung**

a) Es wird eine Mischung eines fluorierten Phosphorsäureesters (Chemguard® S760-P, abgekürzt CG) und der Verbindung des Beispiels 1 (A) im Mischungsverhältnis 20/80 (CG/A bezogen auf Gew.-%) hergestellt.
Die Gesamtmischung wird mit deionisiertem Wasser auf einen Feststoffgehalt von 35 Gew.-% eingestellt
b) Analog a) werden Tensidmischungen in den Mischungsverhältnissen 90/10, 85/15, 75/25 und 70/30 (A/CG) hergestellt.
c) Die statischen Oberflächenspannungen werden nach der angegebenen Methode bestimmt und sind in Tabelle 1 zusammengefasst.

**Tabelle 1**

| Tensid/Mischung | $\gamma$[mN/m] bei 2 g/L |
|---|---|
| Chemguard S-760P | 18,71 |
| Verbindung A | 21,00 |
| 90:10 | 18,34 |
| 85:15 | 17,28 |
| 80:20 | 17,14 |
| 75:25 | 16,92 |
| 70:30 | 16,84 |

Aus den Ergebnissen wird deutlich, dass bei einer Massenkonzentration von 2 g/L in Wasser die Tensidmischungen ab einem Verhältnis der Verbindung A zur Verbindung CG von 85:15 die statische Oberflächenspannung signifikant herabsetzen. Es können in unterschiedlichen Mischungsverhältnissen synergetische Effekte im Bereich 0,4 - 1,9 mN/m erzielt werden.

Abbildungen:

Abbildung 1 zeigt die statischen Oberflächenspannungen $\gamma_{stat}$. der Tensidmischungen nach Beispiel 4.
Abbildung 2 zeigt die statischen Oberflächenspannungen $\gamma_{stat}$. der Einzelkomponenten des Beispiels 4.

## Patentansprüche

1. Tensidmischung enthaltend mindestens eine Verbindung A, deren dynamische Oberflächenspannung $\gamma_{dyn}$. gemessen nach der Blasendruckmethode bei 20°C $\pm$ 0,2°C bei einer Einsatzkonzentration von 0,1 Gew.-% und einer Blasenlebensdauer von 100 ms $\leq$ 45 mN/m ist, und mindestens eine Verbindung B, deren statische Oberflächenspannung $\gamma_{stat}$. $\leq$ der statischen Oberflächenspannung $y_{stat}$. der Verbindung A ist, wobei die statische Oberflächenspannung $\gamma_{stat}$. nach der Wilhelmy Plattenmethode bei 20°C $\pm$ 0,2°C gemessen ist und wobei mindestens eine der Verbindungen A und mindestens eine der Verbindungen B ein Fluortensid ist.

2. Tensidmischung gemäß Anspruch 1, **dadurch gekennzeichnet, dass** die Verbindungen A eine dynamische Oberflächenspannung $\gamma_{dyn}$. von $\leq$ 35 mN/m aufweisen (0,1 Gew.-% und 100 ms).

3. Tensidmischung gemäß einem oder mehreren der Ansprüche 1 bis 2, **dadurch gekennzeichnet, dass** die Verbindungen B eine statische Oberflächenspannung $\gamma_{stat.}$ von ≤ 20 mN/m aufweisen.

**4.** Tensidmischung gemäß einem oder mehreren der Ansprüche 1 bis 3, **dadurch gekennzeichnet, dass** die Verbindungen A eine dynamische Oberflächenspannung $\gamma_{dyn.}$ von ≤ 30 mN/m aufweisen und die Verbindungen B eine statische Oberflächenspannung $\gamma_{stat.}$ von ≤ 20 mN/m aufweisen.

**5.** Tensidmischung gemäß einem oder mehreren der Ansprüche 1 bis 4, **dadurch gekennzeichnet, dass** sie mindestens eine Verbindung der Formel (I) enthält

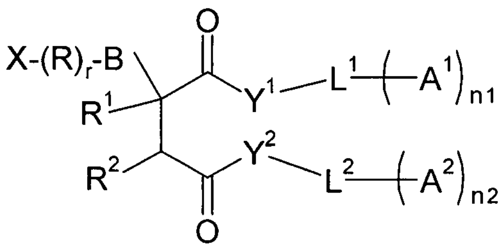

(I)

wobei

X eine hydrophile Gruppe ist,
R = lineares oder verzweigtes Alkylen ist, wobei ein oder mehrere nicht benachbarte C-Atome durch O, S, und/oder N ersetzt sein können,
r = 0 oder 1 ist,
B = eine Einfachbindung, O, NH, NR', $CH_2$, C(O)-O, S, $CH_2$-O, O-C(O), O-C(O)-O, N-C(O), C(O)-N, O-C(O)-N, N-C(O)-N, $SiR'_2$-, $SiR'_2$-O, O-$SO_2$ oder $SO_2$-O ist, wobei R' = lineares oder verzweigtes Alkyl ist,
$R^1$ und $R^2$ = unabhängig voneinander Wasserstoff oder $-CH_2-COY^3-L^3-(A^3)_{n3}$ sind,
$Y^1$, $Y^2$ und $Y^3$ = unabhängig voneinander O, S oder N sind,
$L^1$, $L^2$ und $L^3$ = unabhängig voneinander lineares oder verzweigtes Alkylen sind, wobei ein oder mehrere nicht benachbarte C-Atome durch O, S, und/oder N ersetzt sein können,
$A^1$, $A^2$ und $A^3$ = unabhängig voneinander Wasserstoff oder eine Gruppe der Struktur $-Z^i(CR^3R^4)_{mi}Rf^i$, mit i = 1, 2 oder 3, sind,
$Z^i$ = O, S oder N ist und an ein C-Atom von $L^i$ gebunden ist oder eine Einfachbindung ist,
$R^3$ und $R^4$ unabhängig voneinander Wasserstoff oder eine Alkylgruppe sind,
$Rf^i$ ein fluorhaltiger Rest ist,
n1, n2 und n3 = unabhängig voneinander 1-6 sind,
m1, m2 und m3 = unabhängig voneinander 0-5 sind,

und die Verbindungen der Formel (I) mindestens eine $Rf^i$-Gruppe enthalten.

**6.** Tensidmischung gemäß einem oder mehreren der Ansprüche 1 bis 5, **dadurch gekennzeichnet, dass** sie mindestens eine Verbindung der Formel (II) enthält

(RF-(Spacer)m)nM (II)

wobei

RF eine fluorhaltige Gruppe ist,
Spacer eine Einfachbindung oder eine organische funktionelle Kohlenstoffkette ist,
n ≥1 ist,
m = 0-1 und
M eine anionische, kationische, amphotere oder nicht-ionische Gruppe ist.

**7.** Tensidmischung gemäß einem oder mehreren der Ansprüche 1 bis 6, **dadurch gekennzeichnet, dass** sie eine Verbindung der Formel (I) und eine Verbindung der Formel (II) enthält.

8. Tensidmischung gemäß einem oder mehreren der Ansprüche 1 bis 7, **dadurch gekennzeichnet, dass** als Verbindungen der Formel (I) Verbindungen der Formeln (III), (IV) und/oder (V) verwendet werden:

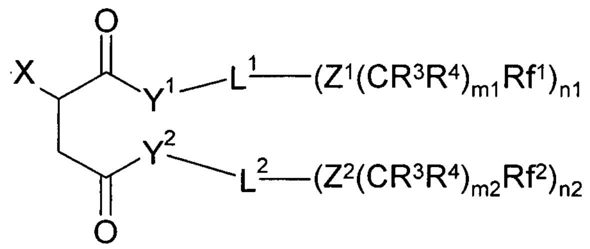

(III)

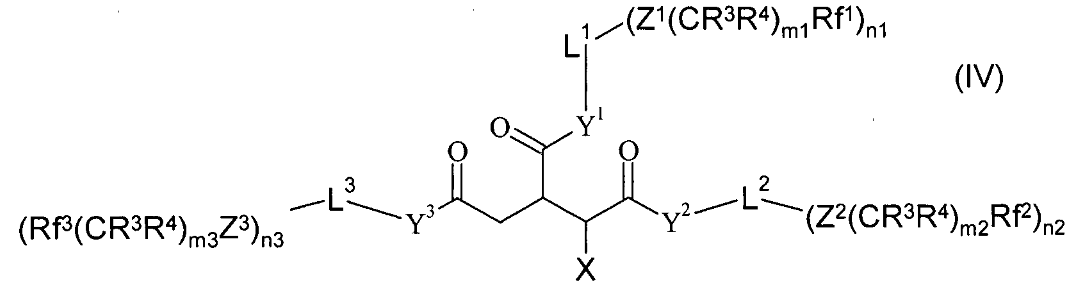

(IV)

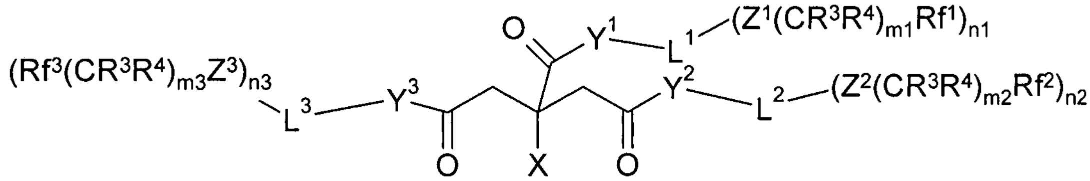

(V)

mit

X gleich $-SO_3^-$, $-OSO_3^-$, $-PO_3^{2-}$ oder $OPO_3^{2-}$, insbesondere $-SO_3^-$, $Y^1$, $Y^2$, $Y^3$, $Z^1$, $Z^2$ und $Z^3$ gleich O,
$Rf^1$, $Rf^2$ und $Rf^3$ gleich perfluorierten Gruppen $Rf^i$ mit 1 bis 4 C-Atomen,
n1, n2 und n3 gleich 1 oder 2,
m1, m2 und m3 gleich 1-4,
$L^1$, $L^2$ und $L^3$ gleich lineares oder verzweigtes C3 - C6-Alkylen,
$R^3$ und $R^4$ gleich Wasserstoff oder eine Alkylgruppe mit 1 bis 3 C-Atomen.

9. Tensidmischung gemäß einem oder mehreren der Ansprüche 1 bis 8, **dadurch gekennzeichnet, dass** in den Verbindungen der Formel (II) die Gruppierung $(RF\text{-}(Spacer)_m)_n$- gleich $C_{n'}F_{2n+1}$-, $C_{n'}F_{2n'+1}$-$CH_2CH_2$-, $C_{n'}F_{2n'+1}$-$OCF_2CF_2$-, $C_{n'}F_{2n'+1}$-$OC_6H_4$-, $C_{n'}F_{2n+1}$-$C(O)NH(CH_2)_3N$=, $C_{n'}F_{2n'+1}$-$SO_2NH(CH_2)_3N$=, $CF_3CCl_2(CF_2CFCl)_{n'-1}$-$CF_2$- oder $C_8F_{17}CH_2CH_2Si(CH_3)_2$- ist, mit n' = 4-12, und M gleich $-OPOO^-$, $-COO^-$, $-SO_3^-$, $-OSO_3^-$, $-OP(O)(O^-)O$- oder $-OP(O)O_2^{2-}$ ist, bevorzugt mit $H^+$, $Na^+$, $K^+$, $Li^+$ oder $NH_4^+$ als Gegenion.

10. Tensidmischung gemäß einem oder mehreren der Ansprüche 1 bis 9, **dadurch gekennzeichnet, dass** sie eine Verbindung der Formel (IV) und eine Verbindung der Formel (II) mit $(RF\text{-}(Spacer)_m)_n$- gleich $C_{n'}F_{2n'+1}$-$CH_2CH_2$- und M gleich $-OPOO^-$, mit m = 1, n = 2 und n' = 4-12 und $Na^+$ als Gegenion enthält.

11. Tensidmischung gemäß einem oder mehreren der Ansprüche 1 bis 10, **dadurch gekennzeichnet, dass** sie mindestens eine Verbindung der Formeln (VII) bis (X) enthält

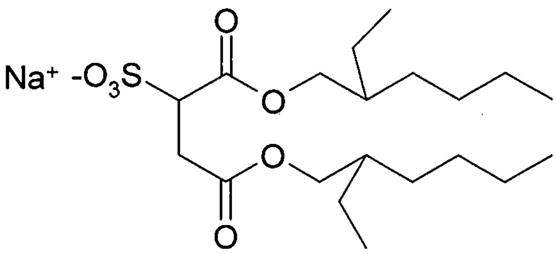

(VII)

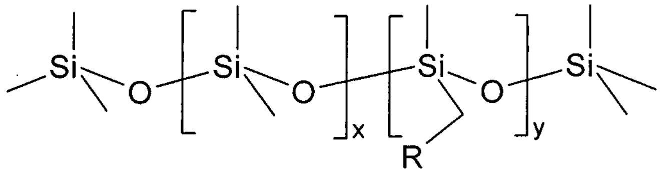

(VIII)

wobei x = 1-500, y = 1-500 und R = phenyl, methyl oder $-(O-C_2H_3R')_{n''}-OR''$ ist, mit n" = 1-1000, R' = lineare und verzweigte Alkylrest und R" = lineare und verzeigte Alkylreste,

$M_2(D'E_{n'''})PM$ (IX)

wobei M = $(CH_3)_3SiO-$, D' = $Si(CH_3)(R''')$, E = $OCH_2CH_2$, n''' = 5 - 40 und P = OH, OMe, oder OAc ist, mit R''' = lineare und/oder verzweigte Alkylkette,

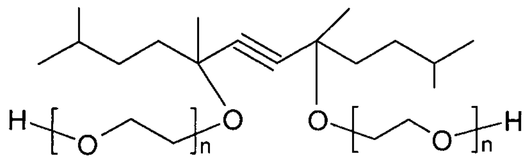

(X)

wobei n = 1-100 ist.

**12.** Verwendung einer Tensidmischung gemäß einem oder mehreren der Ansprüche 1 bis 11 als Additive in Farben, Lacken, Druckfarben, Schutzanstrichen, Spezialcoatings in elektronischen oder optischen Anwendungen, Photolacken, Top Antireflective Coatings, Bottom Antireflective Coatings, photographischen Beschichtungen, Beschichtungen optischer Elemente, Bodenpolituren, Klebstoffen, Feuerlöschmitteln, Schmierstoffen, Wasch- und Reinigungsmitteln, Enteisern oder Entwicklerlösungen, Spüllösungen, Immersionsölen und Photoresists für photolithographische Verfahren.

**13.** Mittel enthaltend eine Tensidmischung gemäß einem oder mehreren der Ansprüche 1 bis 11 und einen für den jeweiligen Verwendungszweck geeigneten Träger sowie ggf. weitere spezifische Aktivstoffe.

**14.** Mittel nach Anspruch 13, **dadurch gekennzeichnet, dass** es sich bei dem Mittel um Farb- und Lackzubereitungen, Feuerlöschmittel, Schmierstoffe, Wasch- und Reinigungsmittel, Enteiser, Hydrophobiermittel zur Textilausrüstung oder Glasbehandlung, Bodenpolituren, Klebstoffe oder Entwicklerlösungen, Spüllösungen, Immersionsöle und Photoresists für photolithographische Verfahren handelt.

**15.** Verbindungen der Formeln (IV-1) oder (IV-2), wobei * den jeweiligen Anknüpfungspunkt angibt

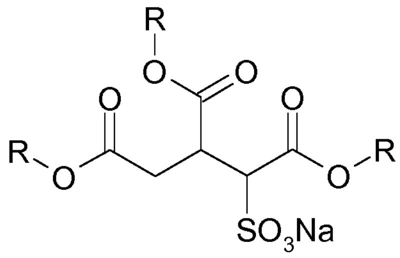 R = 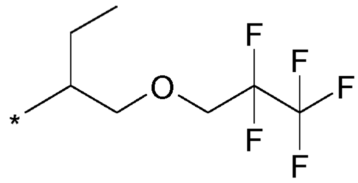

(IV-1)

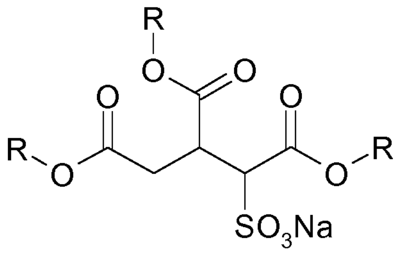 R = 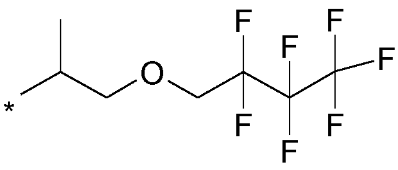

(IV-2)

**16.** Verwendung von Verbindungen der Formeln (IV-1) und (IV-2) als Tenside.

**17.** Verwendung von Verbindungen der Formeln (IV-1) und/oder (IV-2) als Additive in Farben, Lacken, Druckfarben, Schutzanstrichen, Spezialcoatings in elektronischen oder optischen Anwendungen, Photolacken, Top Antireflective Coatings, Bottom Antireflective Coatings, photographischen Beschichtungen, Beschichtungen optischer Elemente, Bodenpolituren, Klebstoffen, Feuerlöschmitteln, Schmierstoffen, Wasch- und Reinigungsmitteln, Enteisern oder Entwicklerlösungen, Spüllösungen, Immersionsöle und Photoresists für photolithographische Verfahren handelt.

**18.** Mittel enthaltend Verbindungen der Formeln (IV-1) und/oder (IV-2) und einen für den jeweiligen Verwendungszweck geeigneten Träger sowie ggf. weitere spezifische Aktivstoffe.

**19.** Mittel nach Anspruch 18, **dadurch gekennzeichnet, dass** es sich bei dem Mittel um Farb- und Lackzubereitungen, Feuerlöschmittel, Schmierstoffe, Wasch- und Reinigungsmittel, Enteiser, Hydrophobiermittel zur Textilausrüstung oder Glasbehandlung, Bodenpolituren, Klebstoffe oder Entwicklerlösungen, Spüllösungen, Immersionsöle und Photoresists für photolithographische Verfahren handelt.

## Claims

**1.** Surfactant mixture comprising at least one compound A whose dynamic surface tension $\gamma_{dyn.}$, measured by the bubble pressure method at 20°C ± 0.2°C at a use concentration of 0.1% by weight and a bubble lifetime of 100 ms, is ≤ 45 mN/m, and at least one compound B whose static surface tension $\gamma_{stat.}$ is ≤ the static surface tension $\gamma_{stat.}$ of compound A, where the static surface tension $y_{stat.}$ is measured by the Wilhelmy plate method at 20°C ± 0.2°C and where at least one of compounds A and at least one of compounds B is a fluorosurfactant.

**2.** Surfactant mixture according to Claim 1, **characterised in that** the compounds A have a dynamic surface tension $\gamma_{dyn.}$ of ≤ 35 mN/m (0.1% by weight and 100 ms).

**3.** Surfactant mixture according to one or more of Claims 1 to 2, **characterised in that** the compounds B have a static surface tension $\gamma_{stat.}$ of ≤ 20 mN/m.

**4.** Surfactant mixture according to one or more of Claims 1 to 3, **characterised in that** the compounds A have a dynamic surface tension $\gamma_{dyn.}$ of ≤ 30 mN/m and the compounds B have a static surface tension $\gamma_{stat.}$ of ≤ 20 mN/m.

**5.** Surfactant mixture according to one or more of Claims 1 to 4, **characterised in that** it comprises at least one compound of the formula (I)

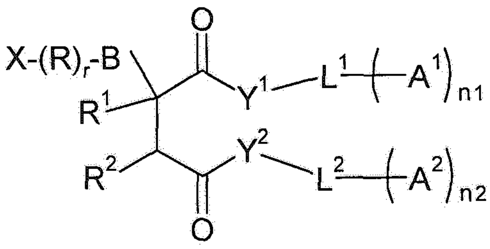

(I)

where

X is a hydrophilic group,
R = linear or branched alkylene, where one or more non-adjacent C atoms may be replaced by O, S, and/or N,
r = 0 or 1,
B = a single bond, O, NH, NR', $CH_2$, C(O)-O, S, $CH_2$-O, O-C(O), O-C(O)-O, N-C(O), C(O)-N, O-C(O)-N, N-C(O)-N, $SiR'_2$-, $SiR'_2$-O, O-$SO_2$ or $SO_2$-O, where R' = linear or branched alkyl,
$R^1$ and $R^2$ =, independently of one another, hydrogen or $-CH_2-COY^3-L^3-(A^3)_{n3}$,
$Y^1$, $Y^2$ and $Y^3$ =, independently of one another, O, S or N,
$L^1$, $L^2$ and $L^3$ =, independently of one another, linear or branched alkylene, where one or more non-adjacent C atoms may be replaced by O, S, and/or N,
$A^1$, $A^2$ and $A^3$ =, independently of one another, hydrogen or a group of the structure $-Z^i(CR^3R^4)_{mi}Rf^i$, where i = 1, 2 or 3,
$Z^i$ = O, S or N and is bonded to a C atom of $L^i$ or is a single bond, $R^3$ and $R^4$ are, independently of one another, hydrogen or an alkyl group,
$Rf^i$ is a fluorine-containing radical,
n1, n2 and n3 =, independently of one another, 1-6,
m1, m2 and m3 =, independently of one another, 0-5,

and the compounds of the formula (I) contain at least one $Rf^i$ group.

6. Surfactant mixture according to one or more of Claims 1 to 5, **characterised in that** it comprises at least one compound of the formula (II)

(RF-(spacer)m)nM (II)

where

RF is a fluorine-containing group,
spacer is a single bond or an organic functional carbon chain,
n is ≥1,
m = 0-1 and
M is an anionic, cationic, amphoteric or nonionic group.

7. Surfactant mixture according to one or more of Claims 1 to 6, **characterised in that** it comprises a compound of the formula (I) and a compound of the formula (II).

8. Surfactant mixture according to one or more of Claims 1 to 7, **characterised in that** the compounds of the formula (I) used are compounds of the formulae (III), (IV) and/or (V):

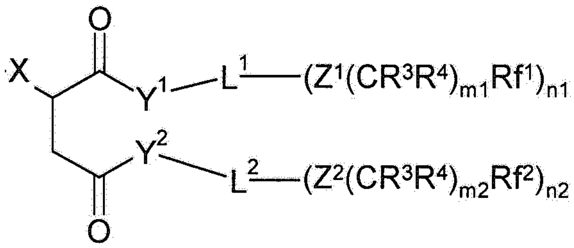

(III)

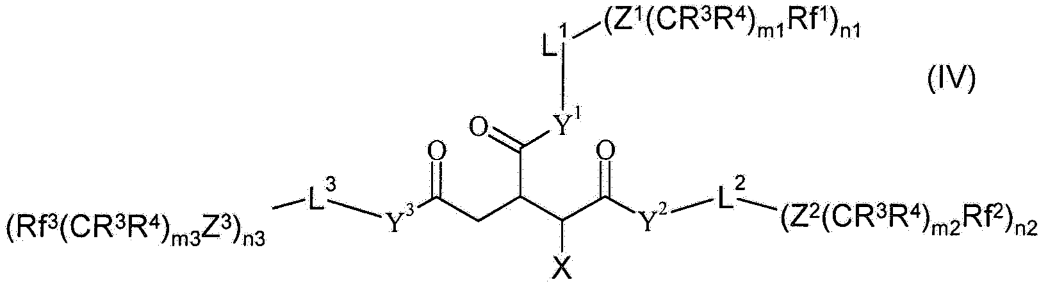

(IV)

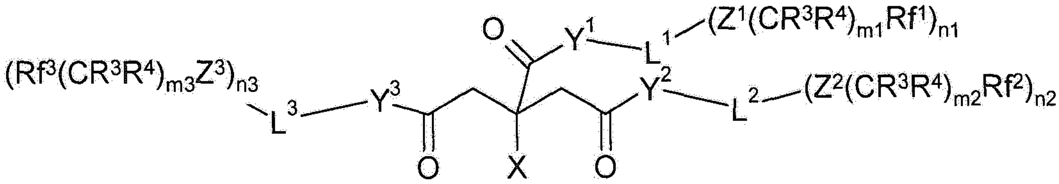

(V)

where

X is equal to -SO3$^-$, -OSO$_3^-$, -PO3$^{2-}$ or OPO$_3^{2-}$, in particular -SO$_3^-$, $Y^1$, $Y^2$, $Y^3$, $Z^1$, $Z^2$ and $Z^3$ are equal to O,
$Rf^1$, $Rf^2$ and $Rf^3$ are equal to perfluorinated groups $Rf^i$ having 1 to 4 C atoms,
n1, n2 and n3 are equal to 1 or 2,
m1, m2 and m3 are equal to 1-4,
$L^1$, $L^2$ and $L^3$ are equal to linear or branched C3 - C6-alkylene,
$R^3$ and $R^4$ are equal to hydrogen or an alkyl group having 1 to 3 C atoms.

**9.** Surfactant mixture according to one or more of Claims 1 to 8, **characterised in that**, in the compounds of the formula (II), the (RF-(spacer)$_m$)$_n$- group is equal to $C_{n'}F_{2n'+1}$-, $C_{n'}F_{2n'+1}$-$CH_2CH_2$-, $C_{n'}F_{2n'+1}$-$OCF_2CF_2$-, $C_{n'}F_{2n'+1}$-$OC_6H_4$-, $C_{n'}F_{2n'+1}$-C(O)NH$(CH_2)_3$N=, $C_{n'}F_{2n+1}$-$SO_2$NH$(CH_2)_3$N=, $CF_3CCl_2(CF_2CFCl)_{n'-1}$-$CF_2$- or $C_8Fi_7CH_2CH_2Si(CH_3)_2$-, where n' = 4-12, and M is equal to -OPOO$^-$, -COO$^-$, -SO$_3^-$, -OSO$_3^-$, -OP(O)(O$^-$)O- or -OP(O)O$_2^{2-}$, preferably with $H^+$, $Na^+$, $K^+$, $Li^+$ or $NH_4^+$ as counterion.

**10.** Surfactant mixture according to one or more of Claims 1 to 9, **characterised in that** it comprises a compound of the formula (IV) and a compound of the formula (II) where (RF-(spacer)m)n- is equal to $C_{n'}F_{2n+1}$-$CH_2CH_2$- and M is equal to -OPOO$^-$, where m = 1, n = 2 and n' = 4-12 and with $Na^+$ as counterion.

**11.** Surfactant mixture according to one or more of Claims 1 to 10, **characterised in that** it comprises at least one compound of the formulae (VII) to (X)

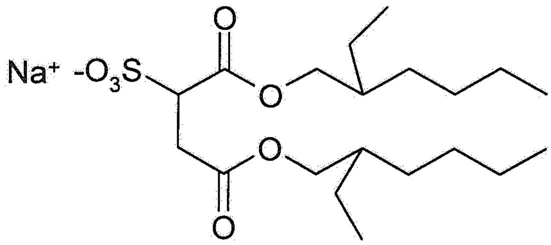

(VII)

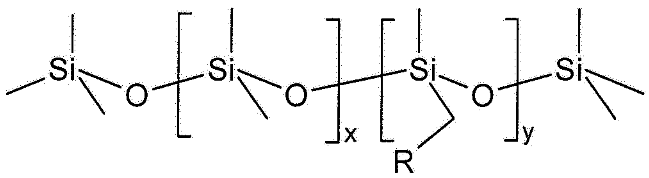

(VIII)

where x = 1-500, y = 1-500 and R = phenyl, methyl or $-(O-C_2H_3R')_{n''}-OR''$, where n" = 1-1000, R' = linear and branched alkyl radical and R" = linear and branched alkyl radicals,

$$M_2(D'E_{n'''})PM \qquad (IX)$$

where M = $(CH_3)_3SiO-$, D' = $Si(CH_3)(R''')$, E = $OCH_2CH_2$, n''' = 5 - 40 and P = OH, OMe or OAc, where R''' = linear and/or branched alkyl chain,

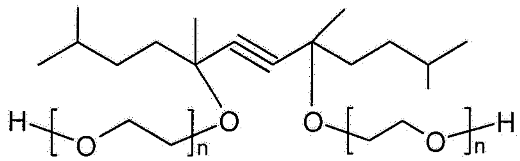

(X)

where n = 1-100.

**12.** Use of a surfactant mixture according to one or more of Claims 1 to 11 as additives in paints, coatings, printing inks, protective coatings, special coatings in electronic or optical applications, photoresists, top antireflective coatings, bottom antireflective coatings, photographic coatings, coatings of optical elements, floor polishes, adhesives, fire-extinguishing agents, lubricants, washing agents and detergents, de-icers or developer solutions, rinse solutions, immersion oils and photoresists for photolithographic processes.

**13.** Composition comprising a surfactant mixture according to one or more of Claims 1 to 11 and a vehicle which is suitable for the respective application, and optionally further specific active substances.

**14.** Composition according to Claim 13, **characterised in that** the composition is paint and coating preparations, fire-extinguishing agents, lubricants, washing agents and detergents, de-icers, hydrophobicising agents for textile finishing or glass treatment, floor polishes, adhesives or developer solutions, rinse solutions, immersion oils and photoresists for photolithographic processes.

**15.** Compounds of the formulae (IV-1) or (IV-2), where * indicates the respective linking point

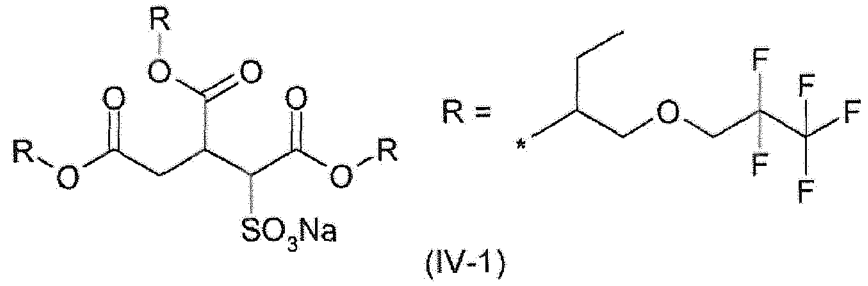

(IV-1)

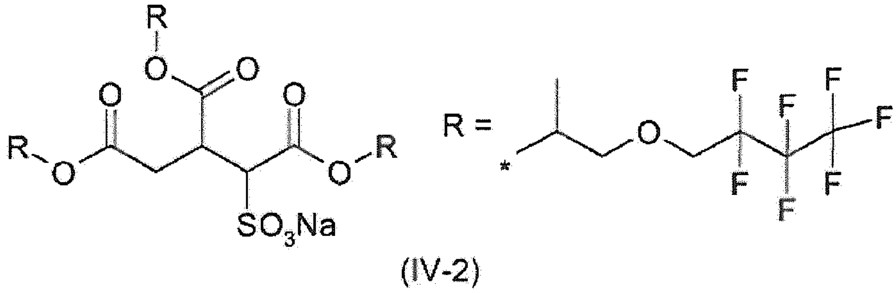

(IV-2)

**16.** Use of compounds of the formulae (IV-1) and (IV-2) as surfactants.

**17.** Use of compounds of the formulae (IV-1) and/or (IV-2) as additives in paints, coatings, printing inks, protective coatings, special coatings in electronic or optical applications, photoresists, top antireflective coatings, bottom antireflective coatings, photographic coatings, coatings of optical elements, floor polishes, adhesives, fire-extinguishing agents, lubricants, washing agents and detergents, de-icers or developer solutions, rinse solutions, immersion oils and photoresists for photolithographic processes.

**18.** Composition comprising compounds of the formulae (IV-1) and/or (IV-2) and a vehicle which is suitable for the respective application, and optionally further specific active substances.

**19.** Composition according to Claim 18, **characterised in that** the composition is paint and coating preparations, fire-extinguishing agents, lubricants, washing agents and detergents, de-icers, hydrophobicising agents for textile finishing or glass treatment, floor polishes, adhesives or developer solutions, rinse solutions, immersion oils and photoresists for photolithographic processes.

## Revendications

**1.** Mélange d'agents tensioactifs comprenant au moins un composé A dont la tension superficielle dynamique $\gamma_{dyn.}$, mesurée par la méthode de la pression de bulle à 20°C ± 0,2°C à une concentration d'utilisation de 0,1% en poids et une durée de vie de la bulle de 100 ms, est ≤ 45 mN/m, et au moins un composé B dont la tension superficielle statique $\gamma_{stat}$. est ≤ la tension superficielle statique $\gamma_{stat}$. du composé A, où la tension superficielle statique $\gamma_{stat}$. est mesurée par la méthode de la plaque de Wilhelmy à 20°C ± 0,2°C et où au moins l'un parmi les composés A et au moins l'un parmi les composés B est un agent tensioactif fluoré.

**2.** Mélange d'agents tensioactifs selon la revendication 1, **caractérisé en ce que** les composés A possèdent une tension superficielle dynamique $\gamma_{dyn}$. ≤ 35 mN/m (0,1% en poids et 100 ms).

**3.** Mélange d'agents tensioactifs selon l'une ou plusieurs parmi les revendications 1 à 2, **caractérisé en ce que** les composés B possèdent une tension superficielle statique $\gamma_{stat}$. ≤ 20 mN/m.

**4.** Mélange d'agents tensioactifs selon l'une ou plusieurs parmi les revendications 1 à 3, **caractérisé en ce que** les composés A possèdent une tension superficielle dynamique $\gamma_{dyn}$. ≤ 30 mN/m et les composés B possèdent une tension superficielle statique $\gamma_{stat}$. ≤ 20 mN/m.

5. Mélange d'agents tensioactifs selon l'une ou plusieurs parmi les revendications 1 à 4, **caractérisé en ce qu'**il comprend au moins un composé de formule (I)

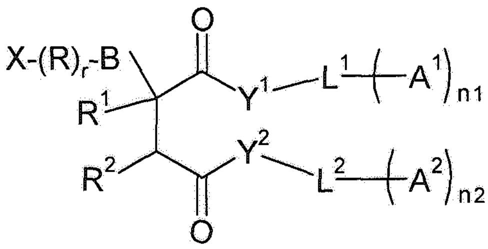

(I)

où

X est un groupement hydrophile,
R = alkylène linéaire ou ramifié, où un ou plusieurs atomes de C non adjacents peuvent être remplacés par O, S, et/ou N,
r=0 ou 1,
B = une liaison simple, O, NH, NR', $CH_2$, C(O)-O, S, $CH_2$-O, O-C(O), O-C(O)-O, N-C(O), C(O)-N, O-C(O)-N, N-C(O)-N, $SiR'_2$-, $SiR'_2$-O, O-$SO_2$ ou $SO_2$-O, où R' = alkyle linéaire ou ramifié,
$R^1$ et $R^2$ =, indépendamment l'un de l'autre, hydrogène ou -$CH_2$-$COY^3$-$L^3$-$(A^3)_{n3}$,
$Y^1$, $Y^2$ et $Y^3$ =, indépendamment les uns des autres, O, S ou N,
$L^1$, $L^2$ et $L^3$ =, indépendamment les uns des autres, alkylène linéaire ou ramifié, où un ou plusieurs atomes de C non adjacents peuvent être remplacés par O, S, et/ou N,
$A^1$, $A^2$ et $A^3$ =, indépendamment les uns des autres, hydrogène ou un groupement de structure -$Z^i(CR^3R^4)_{mi}Rf^i$, où i = 1, 2 ou 3,
$Z^i$ = O, S ou N et est lié à un atome de C de $L^i$ ou est une liaison simple,
$R^3$ et $R^4$ sont, indépendamment l'un de l'autre, hydrogène ou un groupement alkyle,
$Rf^i$ est un radical contenant du fluor,
n1, n2 et n3 =, indépendamment les uns des autres, 1-6,
m1, m2 et m3 =, indépendamment les uns des autres, 0-5,

et les composés de formule (I) contiennent au moins un groupement $Rf^i$.

6. Mélange d'agents tensioactifs selon l'une ou plusieurs parmi les revendications 1 à 5, **caractérisé en ce qu'**il comprend au moins un composé de formule (II)

(RF-(espaceur)m)nM (II)

où

RF est un groupement contenant du fluor,
espaceur est une liaison simple ou une chaîne carbonée organique fonctionnelle,
n est ≥ 1,
m = 0-1 et
M est un groupement anionique, cationique, amphotère ou non ionique.

7. Mélange d'agents tensioactifs selon l'une ou plusieurs parmi les revendications 1 à 6, **caractérisé en ce qu'**il comprend un composé de formule (I) et un composé de formule (II).

8. Mélange d'agents tensioactifs selon l'une ou plusieurs parmi les revendications 1 à 7, **caractérisé en ce que** les composés de formule (I) utilisés sont des composés de formules (III), (IV) et/ou (V):

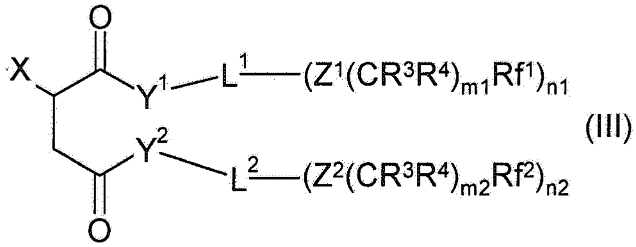

(III)

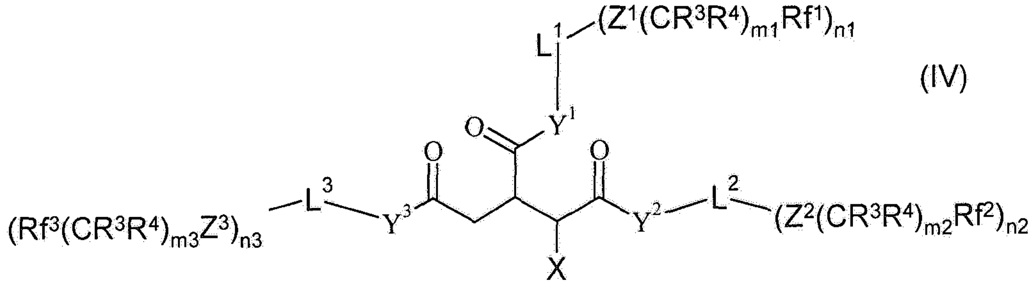

(IV)

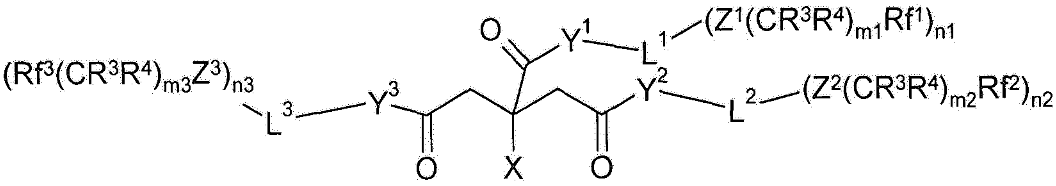

(V)

où

X est égal à $-SO_3^-$, $-OSO_3^-$, $-PO_3^{2-}$ ou $OPO_3^{2-}$, en particulier $-SO_3^-$, $Y^1$, $Y^2$, $Y^3$, $Z^1$, $Z^2$ et $Z^3$ sont égaux à O,
$Rf^1$, $Rf^2$ et $Rf^3$ sont égaux à des groupements perfluorés Rf ayant de 1 à 4 atomes de C,
n1, n2 et n3 sont égaux à 1 ou 2,
m1, m2 et m3 sont égaux à 1-4,
$L^1$, $L^2$ et $L^3$ sont égaux à C3 - C6-alkylène linéaire ou ramifié,
$R^3$ et $R^4$ sont égaux à hydrogène ou un groupement alkyle ayant de 1 à 3 atomes de C.

**9.** Mélange d'agents tensioactifs selon l'une ou plusieurs parmi les revendications 1 à 8, **caractérisé en ce que**, dans les composés de formule (II), le groupement $(RF\text{-}(espaceur)_m)_n$- est égal à $C_{n'}F_{2n+1}$-, $C_{n'}F_{2n'+1}$-$CH_2CH_2$-, $C_{n'}F_{2n+1}$-$OCF_2CF_2$-, $C_{n'}F_{2n'+1}$-$OC_6H_4$-, $C_{n'}F_{2n'+1}$-C(O)NH$(CH_2)_3$N=, $C_{n'}F_{2n'+1}$-$SO_2$NH$(CH_2)_3$N=, $CF_3CCl_2(CF_2CFCl)_{n'-1}$-$CF_2$- ou $C_8F_{17}CH_2CH_2Si(CH_3)_2$-, où n' = 4-12, et M est égal à $-OPOO^-$, $-COO^-$, $-SO_3^-$, $-OSO_3^-$, $-OP(O)(O^-)O$- ou $-OP(O)O_2^{2-}$, préférablement avec $H^+$, $Na^+$, $K^+$, $Li^+$ ou $NH_4^+$ comme contre-ion.

**10.** Mélange d'agents tensioactifs selon l'une ou plusieurs parmi les revendications 1 à 9, **caractérisé en ce qu'**il comprend un composé de formule (IV) et un composé de formule (II) où (RF-(espaceur)m)n- est égal à $C_{n'}F_{2n'+1}$-$CH_2CH_2$- et M est égal à $-OPOO^-$, où m = 1, n = 2 et n' = 4-12 et avec $Na^+$ comme contre-ion.

**11.** Mélange d'agents tensioactifs selon l'une ou plusieurs parmi les revendications 1 à 10, **caractérisé en ce qu'**il comprend au moins un composé de formules (VII) à (X)

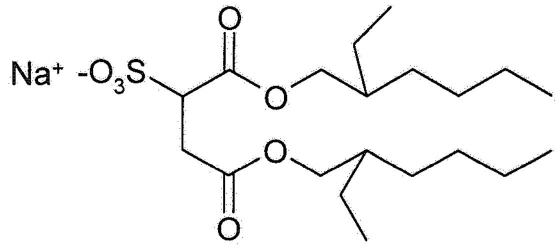

(VII)

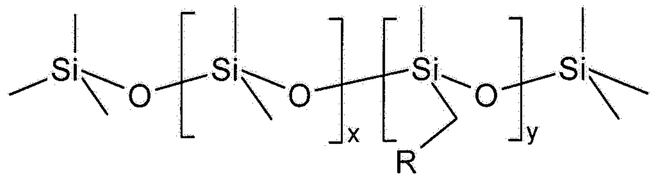

(VIII)

où x = 1-500, y = 1-500 et R = phényle, méthyle ou $-(O-C_2H_3R')_{n''}-OR''$, où n" = 1-1000, R' = radical alkyle linéaire et ramifié et R" = radicaux alkyle linéaires et ramifiés,

$M_2(D'E_{n'''})PM$ (IX)

où M = $(CH_3)_3SiO-$, D' = $Si(CH_3)(R''')$, E = $OCH_2CH_2$, n"' = 5 - 40 et P = OH, OMe ou OAc, où R"' = chaîne alkyle linéaire et/ou ramifiée,

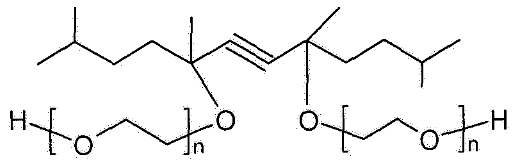

(X)

où n = 1-100.

**12.** Utilisation d'un mélange d'agents tensioactifs selon l'une ou plusieurs parmi les revendications 1 à 11, comme additifs dans les peintures, les revêtements, les encres d'impression, les revêtements protecteurs, les revêtements spéciaux dans les applications électroniques ou optiques, les résines photosensibles, les revêtements antireflets supérieurs, les revêtements antireflets inférieurs, les revêtements photographiques, les revêtements d'éléments optiques, les encaustiques, les adhésifs, les agents d'extinction d'incendies, les lubrifiants, les agents de lavage et les détergents, les dégivreurs ou les solutions de révélateur, les solutions de rinçage, les huiles à immersion et les résines photosensibles pour les procédés photo-lithographiques.

**13.** Composition comprenant un mélange d'agents tensioactifs selon l'une ou plusieurs parmi les revendications 1 à 11 et un véhicule qui est convenable pour l'application respective, et éventuellement d'autres substances actives spécifiques.

**14.** Composition selon la revendication 13, **caractérisée en ce que** la composition est constituée de préparations de peintures et de revêtements, d'agents d'extinction d'incendies, de lubrifiants, d'agents de lavage et de détergents, de dégivreurs, d'agents d'hydrophobie pour la finition des textiles ou le traitement du verre, d'encaustiques, d'adhésifs ou de solutions de révélateur, de solutions de rinçage, d'huiles à immersion et de résines photosensibles pour les procédés photo-lithographiques.

**15.** Composés de formules (IV-1) ou (IV-2), où * indique le point de liaison respectif

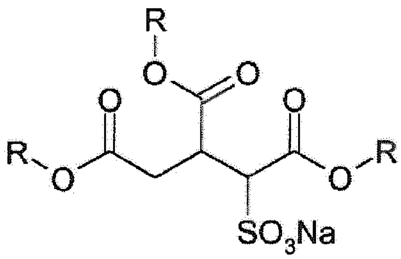

R =

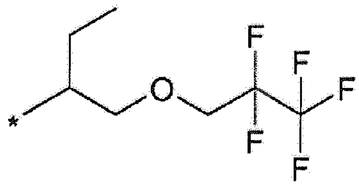

(IV-1)

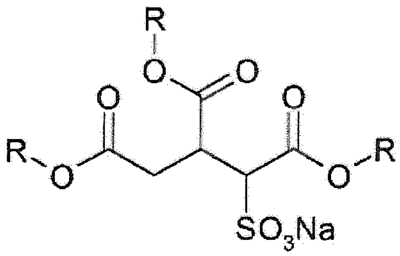

R =

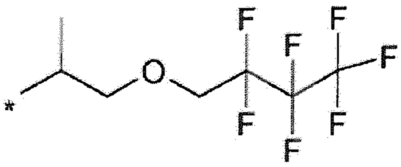

(IV-2)

**16.** Utilisation de composés de formules (IV-1) et (IV-2) comme agents tensioactifs.

**17.** Utilisation de composés de formules (IV-1) et/ou (IV-2) comme additifs dans les peintures, les revêtements, les encres d'impression, les revêtements protecteurs, les revêtements spéciaux dans les applications électroniques ou optiques, les résines photosensibles, les revêtements antireflets supérieurs, les revêtements antireflets inférieurs, les revêtements photographiques, les revêtements d'éléments optiques, les encaustiques, les adhésifs, les agents d'extinction d'incendies, les lubrifiants, les agents de lavage et les détergents, les dégivreurs ou les solutions de révélateur, les solutions de rinçage, les huiles à immersion et les résines photosensibles pour les procédés photo-lithographiques.

**18.** Composition comprenant des composés de formules (IV-1) et/ou (IV-2) et un véhicule qui est convenable pour l'application respective, et éventuellement d'autres substances actives spécifiques.

**19.** Composition selon la revendication 18, **caractérisée en ce que** la composition est constituée de préparations de peintures et de revêtements, d'agents d'extinction d'incendies, de lubrifiants, d'agents de lavage et de détergents, de dégivreurs, d'agents d'hydrophobie pour la finition des textiles ou le traitement du verre, d'encaustiques, d'adhésifs ou de solutions de révélateur, de solutions de rinçage, d'huiles à immersion et de résines photosensibles pour les procédés photo-lithographiques.

Abbildung 1: Statische Oberflächenspannungen $\gamma_{stat.}$ der Mischungen des Beispiels 4

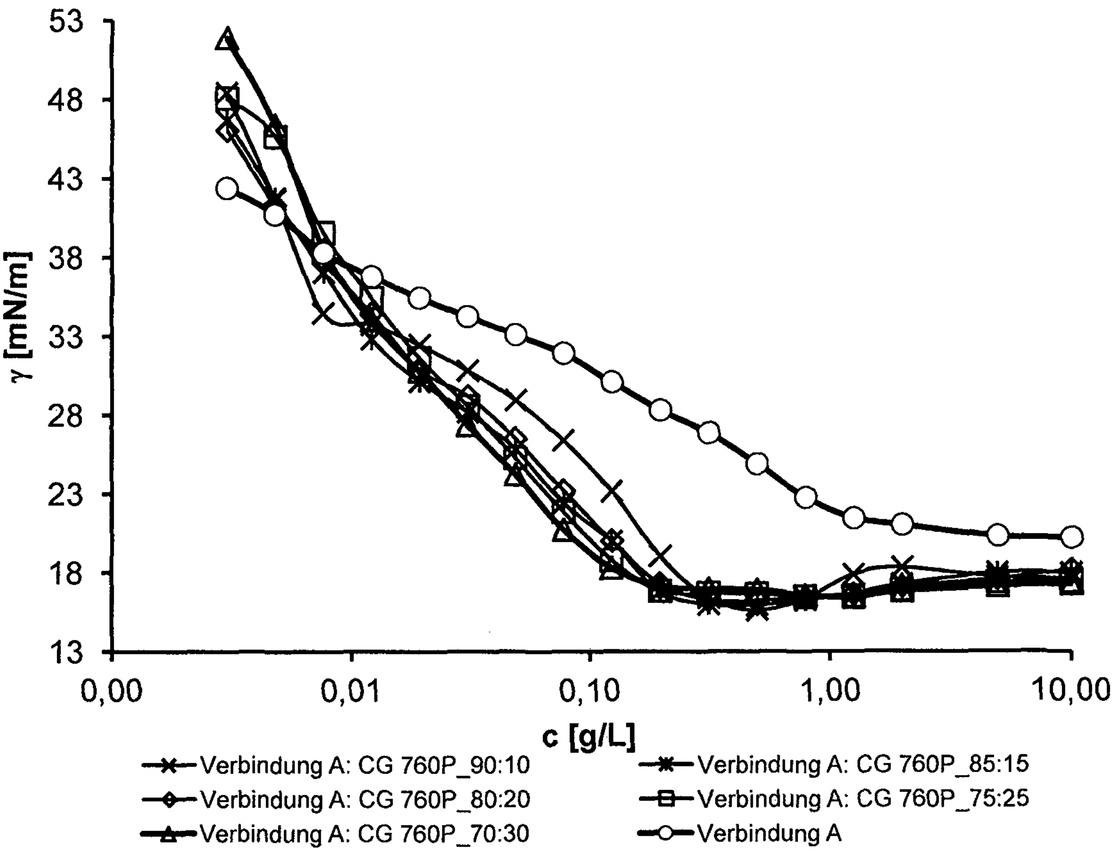

Abbildung 2: statische Oberflächenspannungen $\gamma_{stat.}$ der Einzelkomponenten des Beispiels 4

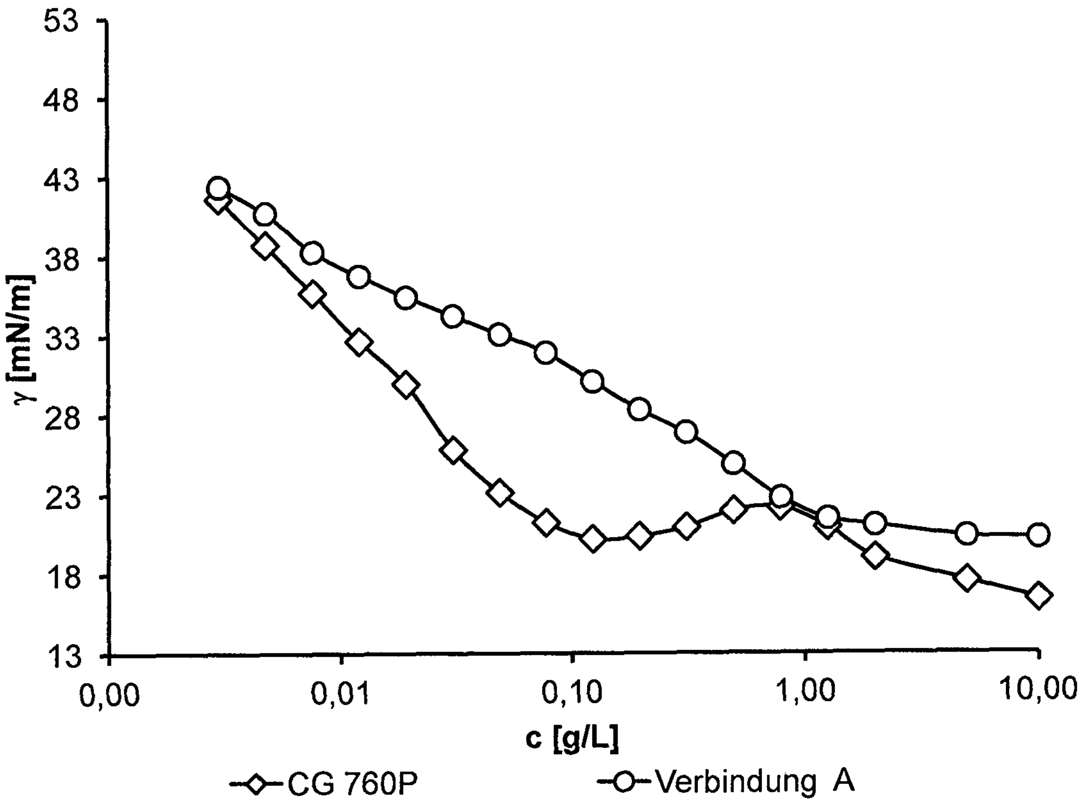

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03010128 A
- JP 2001133984 A
- JP 9111286 A
- WO 2006072401 A
- WO 2010003567 A
- US 4968599 A
- US 4988610 A
- US 6890608 B
- WO 2009149807 A
- WO 2010149262 A
- WO 2011082770 A
- WO 2012084118 A
- US 20050233922 A1
- DE 102004021208 A1
- DE 102009030846 A1
- US 5157159 A, Janulis
- DE 102009030846


### In der Beschreibung aufgeführte Nicht-Patentliteratur


- **A.R. PITT et al.** *Colloids and Surfaces A: Physicochemical and Engineering Aspects,* 1996, vol. 114, 321-335
- **A.R. PITT.** *Progr. Colloid Polym. Sci,* 1997, vol. 103, 307-317
- **Z.-T. LIU et al.** *Ind. Eng. Chem. Res.,* 2007, vol. 46, 22-28
- **C.H.J. JOHNSON et al.** *Journal of Colloid and Interface Science,* 01. April 1974, vol. 47 (1), 117-121
- **D.E. HIRT et al.** *Colloids and Surfaces,* 1990, vol. 44, 101-117
- **HEILMANN et al.** *J. Fluorine Chem.,* 1992, vol. 59, 387
- *Carbohydrate Research,* 1991, vol. 219, 33